# EUROPEAN PATENT SPECIFICATION

(11) **EP 4 543 054 B1**
(45) Date of publication and mention of the grant of the patent: **16.09.2026**
(21) Application number: 24751623.0
(22) Date of filing: 12.07.2024
(51) Int. Cl.: H04W 4/08, H04W 76/14, H04W 76/34, H04W 72/121, H04W 84/12, H04W 84/20, H04W 8/18, H04W 4/80, H04W 8/00, H04W 72/0453

(54) **ELECTRONIC DEVICE FOR OPERATING MAIN GROUP AND AUXILIARY GROUP, AND OPERATION METHOD OF ELECTRONIC DEVICE**
ELEKTRONISCHE VORRICHTUNG ZUM BETRIEB EINER HAUPTGRUPPE UND HILFSGRUPPE SOWIE BETRIEBSVERFAHREN EINER ELEKTRONISCHEN VORRICHTUNG
DISPOSITIF ÉLECTRONIQUE POUR FAIRE FONCTIONNER UN GROUPE PRINCIPAL ET UN GROUPE AUXILIAIRE, ET PROCÉDÉ DE FONCTIONNEMENT DE DISPOSITIF ÉLECTRONIQUE

(30) Priority: 28.08.2023 KR 20230112709; 10.10.2023 KR 20230134277
(43) Date of publication of application: 23.04.2025
(73) Proprietor: Samsung Electronics Co., Ltd., Suwon-si, Gyeonggi-do 16677 (KR)
(72) Inventor: JANG, Wonjun, Suwon-si, Gyeonggi-do 16677 (KR); JUNG, Buseop, Suwon-si, Gyeonggi-do 16677 (KR); KIM, Junsung, Suwon-si, Gyeonggi-do 16677 (KR); LEE, Soonho, Suwon-si, Gyeonggi-do 16677 (KR)
(74) Representative: Appleyard Lees IP LLP
(86) International application number: PCT/KR2024/010064
(87) International publication number: WO 2025/048247

(56) References cited:
- KR-A- 20010 021 153
- KR-A- 20130 015 135
- KR-A- 20150 122 199
- KR-A- 20190 016 274
- US-A1- 2015 163 300
- US-A1- 2018 098 208
- US-A1- 2022 086 763

## Description

### [Technical Field]

An embodiment relates to an electronic device and a method of operating the electronic device, and relates to technology for operating a main group and a secondary group.

### [Background Art]

With the spread of various electronic devices, improvement in the speed of wireless communication that various electronic devices may use has been implemented. Among wireless communications supported by recent electronic devices, IEE 802.11 WLAN (or Wi-Fi) is a standard for implementing high-speed wireless connections on various electronic devices. The first implemented Wi-Fi could support a transmission speed of maximum 1 to 9 Mbps, but Wi-Fi 6 technology (or IEEE 802.11 ax) may support a transmission speed of maximum about 10 Gbps.

Electronic devices may support various services (e.g., high-definition video streaming service, augmented reality (AR) service, virtual reality (VR) service, or mixed reality (MR) service) using data having a relatively large capacity through wireless communication supporting high transmission rates, and support various other services.

In the IEEE 802.11 WLAN standard, technology that supports data transmission and reception through a peer to peer (P2P) method is defined. Technology called Wi-Fi P2P may be technology that supports data transmission and/or reception of an electronic device without going through an access point (AP).

At least two electronic devices may be connected to each other through Wi-Fi P2P technology, and a plurality of electronic devices included in a group generated through Wi-Fi P2P technology may directly transmit and/or receive data. An electronic device that has generated a group (or controlling a group) may be defined as a group owner (GO), and other electronic devices may be defined as a group client (GC). Electronic devices performing a GO role and electronic devices performing a GC role may be included in one group.
US 2015/0163300 A1 describes automatic recreation of a peer-to-peer group in case of group owner termination. US 2022/086763 A1 describes an electronic device for reducing power consumption in a network on basis of Wi-Fi direct protocol.

### [Disclosure of Invention]

### [Technical Problem]

An electronic device may generate a group through short-range wireless communication (e.g., Wi-Fi) and perform communication between electronic devices included in the group. However, among electronic devices included in the group, an electronic device that performs a GO role may become unable to perform the GO role due to various reasons. In a situation where an electronic device performing the GO role may not perform the GO role, the group may be released, and electronic devices included in the group may need to perform again operations (e.g., discovery operation, provisioning discovery exchange operation, group owner negotiation operation, and provisioning operation) of re-generating a group for short-range wireless communication in order to perform communication between electronic devices.

An operation of re-generating a group for short-range wireless communication may take a considerable amount of time, and the time required may cause an increase in communication delay time.

Technical problems to be addressed in this document are not limited to the above-described technical problems, and other technical problems not described may be clearly understood by those of ordinary skill in the art to which the disclosure belongs from the description below.

### [Solution to Problem]

The invention is as defined in the appended claims. According to an example, a first electronic device includes a communication circuit for supporting short-range wireless communication. The first electronic device includes a processor operatively connected to the communication circuit. The first electronic device includes a memory. When executed by the processor, the memory is operable to store an instruction that causes the processor to receive information related to a second group including information related to a frequency band to be used for communication of the second group including the first electronic device and an external electronic device included in the first group and information indicating the external electronic device to operate as a group client (GC) to be included in the second group from a second electronic device operating as a group owner (GO) of a first group in which the first electronic device and the external electronic device operate as a group client (GC). The memory is operable to store an instruction that causes the electronic device to configure the second group including the first electronic device and the external electronic device and excluding the second electronic device based on information related to the second group. The memory is operable to store instructions, in the case that the first group is released, that cause the first electronic device to communicate with an external electronic device included in the second group through a frequency band used by the second group as a group owner (GO) of the second group.

A method of operating a first electronic device according to an example includes receiving information related to a second group including information related to a frequency to be used for communication of a second group including a first electronic device and an external electronic device and information indicating the external electronic device to operate as a group client (GC) to be included in the second group from a second electronic device operating as a group owner (GO) of a first group in which the first electronic device and the external electronic device operate as a group client (GC). The method of operating the first electronic device includes configuring the second group including the first electronic device and the external electronic device and excluding the second electronic device based on information related to the second group. The method of operating the first electronic device includes communicating with the external electronic device included in the second group through a frequency band used by the second group as a connection with the second electronic device is released.

A second electronic device according to an example includes a communication circuit for supporting short-range wireless communication. The second electronic device includes a processor operatively connected to the communication circuit. The second electronic device includes a memory. The memory stores an instruction that, when executed by the processor, causes the electronic device to determine one external electronic device of at least one external electronic device as a group owner (GO) of a second group of electronic devices while the second electronic device operates as a group owner (GO) of a first group including the second electronic device and the at least one external electronic device. The memory stores an instruction that causes the electronic device to control the communication circuit to transmit information related to the second group including a frequency band to be used for communication of the second group and information indicating the at least one external electronic device to operate as a group client (GC) to be included in the second group among the at least one external electronic device to the first electronic device determined as a GO of the second group. The memory stores an instruction that causes to control the communication circuit to transmit information indicating the GO of the second group and information including a frequency band to be used for communication of the second group to an external electronic device performing as a group client (GC) to be included in the second group among the at least one external electronic device.

### [Advantageous Effects of Invention]

In an electronic device and a method of operating the electronic device according to an embodiment, a second electronic device performing the role of a group owner (GO) operating a main group can generate a secondary group including at least some of electronic devices operating as a group client (GC) of the main group. Electronic devices included in the secondary group can perform device to device communication through the pre-generated secondary group in situations where the main group is released or a second electronic device performing a GO role of the main group is difficult to perform short-range wireless communication. Therefore, the electronic device and the method of operating the electronic device can reduce and/or prevent a delay time caused by generation of a new group in a situation where the main group is released or the electronic device performing the GO role of the main group is difficult to perform short-range wireless communication, and improve a quality of services using device to device communication.

Effects that can be obtained from the disclosure are not limited to the above-described effects, and other effects not described may be clearly understood by those of ordinary skill in the art to which the disclosure belongs from the description below.

### [Brief Description of Drawings]

FIG. 1 is a block diagram illustrating an electronic device according to various embodiments of the disclosure.
FIG. 2 is a diagram illustrating a peer to peer (P2P) group through short-range wireless communication according to an embodiment.
FIG. 3 is a diagram illustrating an example of determining a GO based on a GO intent in a P2P group through short-range wireless communication according to an embodiment.
FIG. 4 is a block diagram illustrating a second electronic device according to an embodiment.
FIG. 5 is a block diagram illustrating a first electronic device according to an embodiment.
FIG. 6 is a diagram illustrating an example in which a first electronic device generates a second group according to an embodiment.
FIG. 7 is a diagram illustrating an example in which a first electronic device communicates with external electronic devices included in a second group according to release of a first group according to an embodiment.
FIG. 8 is a diagram illustrating an example in which a first electronic device joins a new external electronic device to a second group as a new external electronic device joins a first group according to an embodiment.
FIG. 9 is a diagram illustrating an example in which a second electronic device generates a new secondary group (e.g., third group) among external electronic devices included in a first group as a connection with a first electronic device is terminated according to an embodiment.
FIG. 10 is a flowchart illustrating a method of operating a first electronic device according to an embodiment.
FIG. 11 is a flowchart illustrating a method of operating a second electronic device according to an embodiment.
FIG. 12 is a message flow diagram illustrating an example in which a second electronic device performs communication through a second group and generates a fourth group including external electronic devices included in the second group according to release of a first group according to an embodiment.
FIG. 13 is a message flow diagram illustrating an example in which a first electronic device performs communication through a second group according to release of connection with a second electronic device and generates a fourth group including external electronic devices included in the second group according to an embodiment.

### [Mode for the Invention]

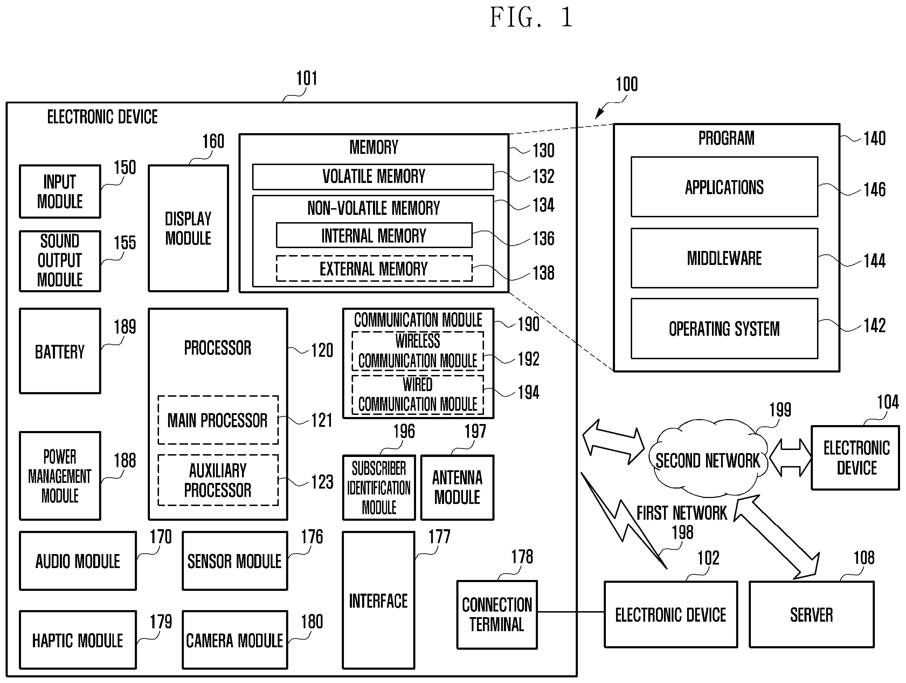

FIG. 1 is a block diagram illustrating an electronic device 101 in a network environment 100 according to certain embodiments. Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 includes a processor 120, memory 130, an input device 150, a sound output device 155, a display device 160, an audio module 170, a sensor module 176, an interface 177, a haptic module 179, a camera module 180, a power management module 188, a battery 189, a communication module 190, a subscriber identification module (SIM) 196, or an antenna module 197. In some embodiments, at least one (e.g., the display device 160 or the camera module 180) of the components may be omitted from the electronic device 101, or one or more other components may be added in the electronic device 101. In some embodiments, some of the components may be implemented as single integrated circuitry. For example, the sensor module 176 (e.g., a fingerprint sensor, an iris sensor, or an illuminance sensor) may be implemented as embedded in the display device 160 (e.g., a display).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may load a command or data received from another component (e.g., the sensor module 176 or the communication module 190) in volatile memory 132, process the command or the data stored in the volatile memory 132, and store resulting data in non-volatile memory 134. According to an embodiment, the processor 120 includes a main processor 121 (e.g., a central processing unit (CPU) or an application processor (AP)), and an auxiliary processor 123 (e.g., a graphics processing unit (GPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display device 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123.

The memory 130 is operable to store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 is stored in the memory 130 as software, and may include, for example, an operating system (OS) 142, middleware 144, or an application 146.

The input device 150 may receive a command or data to be used by other components (e.g., the processor 120) of the electronic device 101, from the outside (e.g., a user) of the electronic device 101. The input device 150 may include, for example, a microphone, a mouse, a keyboard, or a digital pen (e.g., a stylus pen).

The sound output device 155 may output sound signals to the outside of the electronic device 101. The sound output device 155 may include, for example, a speaker or a receiver. The speaker may be used for general purposes, such as playing multimedia or playing record, and the receiver may be used for incoming calls. According to an embodiment, the receiver may be implemented as separate from, or as part of the speaker.

The display device 160 may visually provide information to the outside (e.g., a user) of the electronic device 101. The display device 160 may include, for example, a display, a hologram device, or a projector and control circuitry to control a corresponding one of the display, hologram device, and projector. According to an embodiment, the display device 160 may include touch circuitry adapted to detect a touch, or sensor circuitry (e.g., a pressure sensor) adapted to measure the intensity of force incurred by the touch.

The audio module 170 is operable to convert a sound into an electrical signal and vice versa. According to an embodiment, the audio module 170 may obtain the sound via the input device 150, or output the sound via the sound output device 155 or a headphone of an external electronic device (e.g., an electronic device 102) directly (e.g., by wire) or wirelessly coupled with the electronic device 101.

The sensor module 176 is operable to detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 includes a connector via which the electronic device 101 is physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 is operable to convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 is operable to capture a still image or moving images. According to an embodiment, the camera module 180 may include one or more lenses, image sensors, image signal processors, or flashes.

The power management module 188 is operable to manage power supplied to the electronic device 101. According to one embodiment, the power management module 188 may be implemented as at least part of, for example, a power management integrated circuit (PMIC).

The battery 189 is operable to supply power to at least one component of the electronic device 101. According to an embodiment, the battery 189 may include, for example, a primary cell which is not rechargeable, a secondary cell which is rechargeable, or a fuel cell.

The communication module 190 supports establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 includes a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 is operable to identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 is operable to transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adj acent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

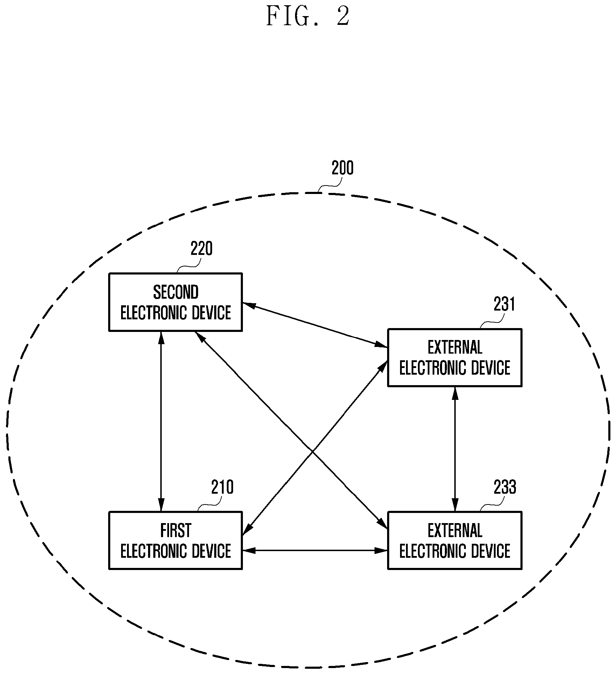

FIG. 2 is a diagram illustrating a peer to peer (P2P) group through short-range wireless communication according to an embodiment.

According to an example, a first electronic device (e.g., the electronic device 101 of FIG. 1) 210 and/or a second electronic device (e.g., the electronic device 101 of FIG. 1) 220 are included in a first group 200 for short-range wireless communication to communicate with electronic devices (e.g., the first electronic device 210, the second electronic device 220, external electronic devices 231 and 233) included in the first group 200.

The first group 200 refers to a group that supports device to device (D2D) communication through short-range wireless communication between electronic devices included in the first group. According to an example, short-range wireless communication may include Wi-Fi direct, and the first group 200 is a group generated using a method defined in Wi-Fi direct and may be referred to as various names such as a P2P group and a Wi-Fi direct group.

Electronic devices (e.g., the first electronic device 210, the second electronic device 220, and the external electronic devices 231 and 233) included in the first group 200 are connected directly through short-range wireless communication without going through separate entities (e.g., access point (AP)). According to an example, electronic devices (e.g., the first electronic device 210, the second electronic device 220, and the external electronic devices 231 and 233) included in a P2P group are connected based on the Wi-Fi direct standard defined in a Wi-Fi alliance (WFA).

In order to be connected to each other through short-range wireless communication, the first electronic device 210 and/or the second electronic device 220 perform a discovery operation of searching for an electronic device to be connected, a provisioning discovery exchange operation, a group owner (GO) negotiation operation of determining an electronic device to be a host among the first electronic device 210 and/or the second electronic device 220, and/or a provisioning operation.

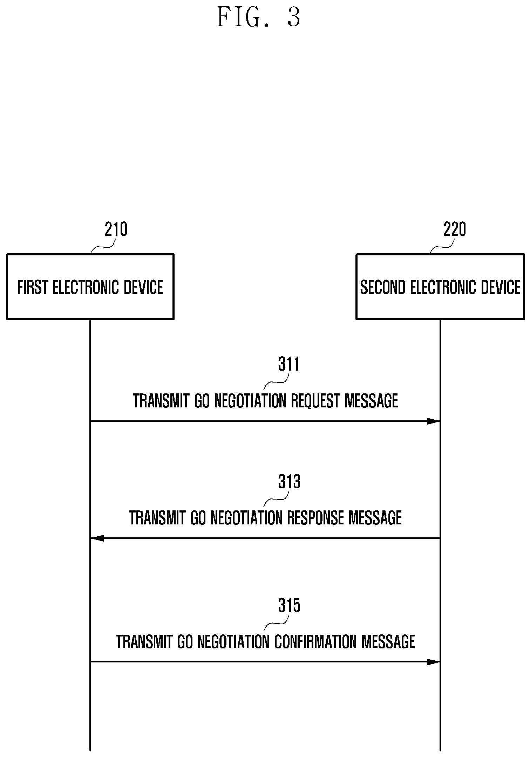

FIG. 3 is a message flow diagram illustrating an example of determining a GO based on GO intent in a P2P group through short-range wireless communication according to an embodiment.

In operation 311, the first electronic device 210 transmits a GO negotiation request message to the second electronic device 220.

In a discovery procedure, the first electronic device 210 searches for an external electronic device (e.g., the second electronic device 220) to be connected through short-range wireless communication and transmits a GO negotiation request message to the found second electronic device 220.

The GO negotiation request message includes P2P IE information and Wi-Fi simple configuration information element (WSC IE) information. P2P IE information includes a GO intent and operating channel attribute information that may be used for determining a GO. The operating channel attribute includes preferred channel information, which is information related to a channel preferred by the first electronic device 210 among channels that may be established between the first electronic device 210 and the second electronic device 220, and/or preferred frequency band information, which is information related to a frequency band preferred by the first electronic device 210. Preferred channel information may be included in a channel number field of an operating channel attribute field. Preferred frequency band information may be included in an operating class field of the operating channel attribute field.

In operation 313, the second electronic device 220 transmits a GO negotiation response message to the first electronic device 210.

The GO negotiation response message includes P2P IE information and WSC IE information. P2P IE information includes a GO intent and operating channel attribute information that may be used for determining a GO. The operating channel attribute includes preferred channel information, which is information related to a channel preferred by the second electronic device 220 among channels that may be established between the first electronic device 210 and the second electronic device 220, and/or preferred frequency band information, which is information related to a frequency band preferred by the second electronic device 220. Preferred channel information may be included in a channel number field of an operating channel attribute field. Preferred frequency band information may be included in an operating class field of the operating channel attribute field.

The first electronic device 210 receives a GO negotiation response message and compare a GO intent included in the GO negotiation response message and a GO intent included in the GO negotiation request message. An electronic device that has transmitted the GO Intent with a larger value becomes a group owner (GO), and an electronic device that has transmitted a GO Intent with the smaller value becomes a group client (GC). The GO operates as a host in a short-range wireless communication system, and the GC operates as a client. In the disclosure, for convenience of description, it is assumed that the first electronic device 210 performs the GC role and that the second electronic device 220 performs the GO role.

The first electronic device 210 selects a channel to be used for connection between the first electronic device 210 and the second electronic device 220 based on a preferred channel of the first electronic device 210, a preferred frequency band of the first electronic device 210, a preferred channel of the second electronic device 220, and/or a preferred frequency band of the second electronic device 220.

In operation 315, the first electronic device 210 transmits a GO negotiation confirmation message to the second electronic device 220.

The GO negotiation confirmation message includes information on the selected channel.

Through the method described in FIG. 3, the first electronic device 210, the second electronic device 220, and/or the external electronic devices 231 and 233 are included in the first group 200 to transmit and/or receive data through short-range wireless communication. The second electronic device 220 operates as a group owner (GO) of the first group 200, and the second electronic device 220 controls communication between electronic devices (e.g., the first electronic device 210, the external electronic devices 231 and 233) included in the first group. According to an example, the second electronic device 220 configures a frequency band, a bandwidth, and/or a channel used by electronic devices (e.g., the first electronic device 210, the external electronic devices 231 and 233) included in the first group when the electronic devices communicate, and transmits information related to the first group including the configured frequency band, bandwidth, and/or channel information to electronic devices (e.g., the first electronic device 210, the external electronic devices 231 and 233) included in the first group through various methods (e.g., beacon).

However, the second electronic device 220 operating as a GO of the first group 200 may be in a state that may not perform short-range wireless communication due to various reasons. For example, in the case that the remaining capacity of the battery of the second electronic device 220 is smaller than or equal to (or less than) the designated magnitude, the second electronic device 220 may not perform short-range wireless communication. For another example, as the second electronic device 220 moves, in the case that the distance between electronic devices (e.g., the first electronic device 210, the external electronic devices 231 and 233) included in the first group 200 and the second electronic device 220 is equal to or greater than (or exceeds) the designated magnitude, the second electronic device 220 may not perform short-range wireless communication.

In the case that the second electronic device 220 operating as a GO of the first group 200 may not perform short-range wireless communication, the first group 200 may be released, and electronic devices (e.g., the first electronic device 210, the external electronic devices 231 and 233) included in the first group 200 may not perform short-range wireless communication using a method (e.g., frequency band, bandwidth, and/or channel information) configured to the first group 200.

The electronic devices (e.g., the first electronic device 210, the external electronic devices 231 and 233) included in the first group 200 may need to perform again an operation (e.g., discovery operation, provisioning discovery exchange operation, group owner negotiation operation, and provisioning operation) of re-generating a group for short-range wireless communication in order to perform D2D communication in a state in which D2D communication may not be performed through short-range wireless communication due to the second electronic device 220. In electronic devices (e.g., the first electronic device 210, the external electronic devices 231 and 233) included in the first group 200, a communication delay time may occur until a group for short-range wireless communication is re-generated after the first group 200 is released.

Hereinafter, an example of generating a second group including at least some of electronic devices included in the first group 200 and reducing a communication delay time until a group for short-range wireless communication is re-generated after release of the first group 200 as electronic devices included in the second group performs communication using the second group according to release of the first group 200 will be described.

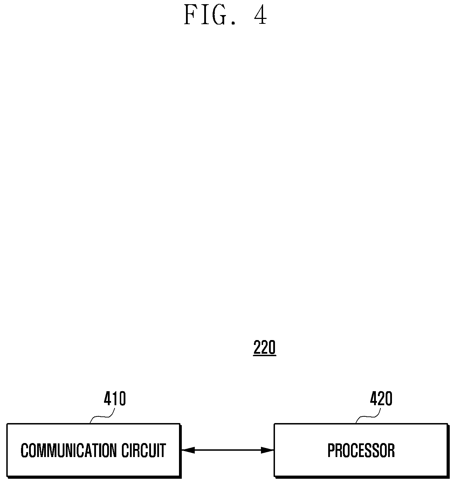

FIG. 4 is a block diagram illustrating a second electronic device according to an embodiment.

The second electronic device (e.g., the second electronic device 220 of FIG. 2) includes a communication circuit (e.g., the wireless communication module 192 of FIG. 1) 410 and a processor (e.g., the processor 120 of FIG. 1) 420.

The communication circuit 410 includes various circuit structures used for modulating and/or demodulating signals within the second electronic device 220. For example, the communication circuit 410 is operable to modulate a baseband signal into a radio frequency (RF) band signal so as to output through an antenna (not illustrated) or demodulate an RF band signal received through an antenna into a baseband signal and transmit the baseband signal to the processor 420.

The communication circuit 410 is operable to perform short-range wireless communication through a first frequency band (e.g., 2.4 GHz), a second frequency band (e.g., 5 GHz), which is a frequency band higher than the first frequency band, and/or a third frequency band (e.g., 6GHz), which is a frequency band higher than the second frequency band.

The processor 420 is operatively connected to the communication circuit 410 to control an operation of the communication circuit 410. At least some of operations of the processor 420 described below may be performed using the communication circuit 410. The processor 420 may execute (or perform) instructions stored on the memory (e.g., the memory 130 of FIG. 1) to perform operations described below.

While the second electronic device 220 operates as a group owner (GO) of the first group (e.g., the first group 200 of FIG. 2) including the second electronic device 220, the first electronic device (e.g., the first electronic device 210 of FIG. 2), and/or the external electronic devices (e.g., the external electronic devices 231 and 233 of FIG. 2), the processor 420 is operable to control the communication circuit 410 to communicate with the electronic devices (e.g., the first electronic device 210, the external electronic devices 231 and 233) included in the first group 200. When generating the first group 200, the processor 420 is operable to perform communication using a frequency band (e.g., first frequency band, second frequency band, and/or third frequency band) and/or a bandwidth (e.g., 20 MHz, 40 MHz) determined by the second electronic device 220. The electronic devices (e.g., the first electronic device 210, the external electronic devices 231 and 233) included in the first group 200 are operable to operate as a group client (GC) of the first group 200, and the electronic devices (e.g., the first electronic device 210, the external electronic devices 231 and 233) included in the first group 200 are operable to perform communication using a frequency band and/or a bandwidth determined by a GO of the first group 200 or the second electronic device 200.

While the second electronic device 220 operates as a GO of the first group 200, the processor 420 is operable to perform an operation of enabling electronic devices (e.g., the first electronic device 210, the external electronic devices 231 and 233) included in the first group 200 to generate a second group different from the first group 200.

The second group may refer to a group activated according to release (or disappearance or termination) of the first group 200. The second group may be referred to as a sub-group, a preliminary group, or a secondary group. The first group may be referred to as a main group. The electronic devices included in the second group may include at least some of electronic devices other than the second electronic device 200 operating as a group owner (GO) of the first group 200 among electronic devices included in the first group 200.

In the case that the first group 200 is released, the second group may be a group that may be converted to (or maintained in) an activated state. As the electronic devices (e.g., the first electronic device 210, the external electronic devices 231 and 233) included in the second group detect release of the first group, the electronic devices are operable to perform communication using a frequency band and/or a bandwidth configured to the second group and prevent a communication delay time from occurring until a group for short-range wireless communication is re-generated as release of the first group.

In the case that the first group 200 is not released, the second group may exist (or be maintained) in an inactive state, and electronic devices (e.g., the first electronic device 210, the external electronic devices 231 and 233) included in the second group are operable to perform short-range wireless communication using a frequency band and/or a bandwidth configured to the first group 200.

Hereinafter, an example in which the second electronic device 220 operating as a GO of the first group 200 generates a second group including at least some of electronic devices included in the first group 200 will be described.

When generating a second group, the processor 420 is operable to determine (or select) an electronic device to operate as a group owner (GO) of the second group among electronic devices operating as GCs of the first group 200.

According to an example, when determining (or selecting) an electronic device to operate as a GO of the second group, the processor 420 is operable to determine (or select) an electronic device to operate as a GO of the second group based on the characteristics of the electronic devices included in the first group 200.

According to an example, the characteristics of the electronic device may include performance information of the electronic device. Performance information of the electronic device may include a response speed. The response speed of the electronic device may be determined based on the difference between a transmission time of a message (or data, signal) transmitted by the second electronic device 220 and a reception time of a response message (or data, signal) corresponding to the message transmitted by the second electronic device 220. The processor 420 is operable to determine an electronic device in which a response speed satisfies a designated condition (e.g., a condition in which a response speed is equal to or greater than a designated magnitude or a condition with the fastest response speed) among electronic devices (e.g., the first electronic device 210, the external electronic devices 231 and 233) operating as GCs of the first group 200 as a GO of the second group.

According to an example, the characteristics of the electronic device may include a value of a GO intent of the electronic device. The processor 420 is operable to determine an electronic device in which a GO intent satisfies a designated condition (e.g., a condition with a highest GO intent) among electronic devices (e.g., the first electronic device 210, the external electronic devices 231 and 233) operating as GCs of the first group as a GO of the second group.

According to an example, the characteristics of the electronic device may include a state in which the electronic device is connected to an external power source (or charger). The processor 420 is operable to determine an electronic device connected to an external power source among electronic devices (e.g., the first electronic device 210, the external electronic devices 231 and 233) operating as GCs of the first group 200 as a GO of the second group. Among electronic devices (e.g., the first electronic device 210, the external electronic devices 231 and 233) operating as GCs of the first group 200, an electronic device connected to an external power source may be less sensitive to battery consumption and provide a stable communication connection compared to electronic devices not connected to an external power source. Accordingly, the processor 420 is operable to determine an electronic device connected to an external power source among electronic devices (e.g., the first electronic device 210, the external electronic devices 231 and 233) operating as GCs of the first group 200 as a GO of the second group, thereby implementing a stable connection of the second group.

According to an example, the characteristics of the electronic device may include a position of the electronic device. The processor 420 is operable to determine an electronic device existing at a position that may perform a stable connection of the second group among electronic devices (e.g., the first electronic device 210, the external electronic devices 231 and 233) operating as GCs of the first group 200 as a GO of the second group. According to an example, the processor 420 is operable to identify positions of electronic devices to be included in the second group and determine an electronic device existing at a position closest to a center area of the second group as a GO of the second group, thereby implementing a stable connection of the second group.

According to an example, the characteristics of the electronic device may include the degree to which the electronic device moves. The processor 420 is operable to determine an electronic device with the least movement among electronic devices (e.g., the first electronic device 210, the external electronic devices 231 and 233) operating as GCs of the first group 200 as a GO of the second group, thereby implementing a stable connection of the second group.

According to an example, when determining (or selecting) an electronic device to operate as a GO of the second group, the processor 420 is operable to determine an electronic device designated by the user's selection and/or an application or a service running on the second electronic device 220 as a GO of the second group.

According to an example, when determining (or selecting) an electronic device to operate as a GO of the second group, the processor 420 is operable to determine a GO of the second group based on the timepoint of joining (or adding to) the first group. The processor 420 is operable to determine an electronic device with the earliest timepoint of joining (or adding to) the first group as a GO of the second group or may determine an electronic device with the latest timepoint of joining (or adding to) the first group as a GO of the second group.

The timing (or timepoint) at which the processor 420 performs an operation of determining (or selecting) an electronic device to operate as a GO of the second group may be implemented in various ways.

According to an example, in the case that the number of electronic devices (e.g., the first electronic device 210, the external electronic devices 231 and 233) included in the first group is equal to or greater than (or exceeds) the designated number (e.g., 2 or 3), the processor 420 is operable to determine to generate a second group and determine an electronic device to operate as a GO of the second group.

Hereinafter, for convenience of description, it is assumed that the second electronic device 220 has determined an electronic device to operate as a GO of the second group to the first electronic device 210.

The processor 420 is operable to control the communication circuit 410 to transmit information related to the second group to a GO (e.g., the first electronic device 210) of the second group. The information related to the second group may include information (or message) indicating that the first electronic device 210 is designated as a GO of the second group and/or information indicating electronic devices (e.g., the external electronic devices 231 and 233) to be included in the second group or electronic devices (e.g., the external electronic devices 231 and 233) to operate as GCs of the second group.

Information (or message) indicating that the first electronic device 210 is designated as a GO of the second group may be implemented as illustrated in Table 1, and information (or message) indicating that the first electronic device 210 is designated as a GO of the second group may include information indicating a frequency band and a frequency bandwidth to be used for communication of the second group.

**[Table 1]**

| Type of message | Frequency band | Bandwidth |
|---|---|---|
| Setsubowner(type indicating designation as GO of second group) | 2.4GHz | 20MHz |

Information indicating electronic devices (e.g., the external electronic devices 231 and 233) to operate as GCs of the second group may be implemented as illustrated in Table 2, and information indicating electronic devices (e.g., the external electronic devices 231 and 233) to operate as GCs of the second group may include identification information (e.g., MAC address, name, various information that may identify the electronic device) of electronic devices to operate as GCs of the second group.

**[Table 2]**

| MAC address | Name | Other information |
|---|---|---|
| AA:BB:CC:DD:EE:FF | External electronic device 231 | |
| BB:CC:DD:EE:FF:11 | External electronic device 233 | |

The first electronic device 210 is operable to generate (or constitute, configure) a second group based on information related to the second group.

The processor 420 is operable to control the communication circuit 410 to transmit information indicating a GO (e.g., the first electronic device 210) of the second group to electronic devices (e.g., the external electronic devices 231 and 233) to operate as GCs of the second group.

As the processor 420 receives a message (or signal) indicating that generation (or constitution, configuration) of the second group is completed from the first electronic device 210, the processor 420 is operable to transmit information indicating a GO (e.g., the first electronic device 210) of the second group to electronic devices (e.g., the external electronic devices 231 and 233) to operate as GCs of the second group. Alternatively, even if a message (or signal) indicating that generation (or constitution, configuration) of the second group is completed is not received from the first electronic device 210, the processor 420 is operable to transmit information indicating a GO (e.g., the first electronic device 210) of the second group to electronic devices (e.g., the external electronic devices 231 and 233) to operate as GCs of the second group.

Information indicating a GO (e.g., the first electronic device 210) of the second group may be implemented as illustrated in Table 3, and information indicating a GO (e.g., the first electronic device 210) of the second group may include identification information of a GO of the second group and information indicating a frequency band and a frequency bandwidth to be used for communication of the second group.

**[Table 3]**

| Message type | MAC address of GO of second group | Name of GO of second group | Frequency band | Bandwidth | Etc. |
|---|---|---|---|---|---|
| Subownerinfo (type indicating information indicating GO of second group) | A1:B2:C3:D4:E5:F6 | First electronic device 210 | 2.4GHz | 20 | ... |

Electronic devices (e.g., the external electronic devices 231 and 233) to operate as GCs of the second group are operable to participate in (or join) the second group through a frequency band to be used for communication of the second group.

Through the method described above, while operating as a GO of the first group 200, the second electronic device 220 is operable to transmit information for generating a second group, which is a secondary group of the first group 200 to electronic devices operating as GCs of the first group 200, and the electronic devices operating as GCs of the first group 200 are operable to generate a second group and then, in the case that the first group is released, perform data transmission and/or reception through the second group, thereby reducing the time required to generate a new group after release of the first group.

When determining a frequency band of the second group, the processor 420 is operable to determine the same frequency band as or a different frequency band from that of the first group as the frequency band of the second group. According to an example, in the case that the frequency band of the first group is 5 GHz, the processor 420 is operable to determine the frequency band of the second group to 2.4 GHz. In the case that the first group is activated (or maintained), considering that the second group is a secondary group that is not actually used, in order to reduce power consumed by electronic devices included in the second group, the processor 420 is operable to determine the frequency band of the second group to a frequency band lower than that of the first group.

In the case that the processor 420 detects that a connection with the first electronic device 210 operating as a GO of the second group is released, the processor 420 is operable to determine external electronic devices other than the first electronic device 210 among electronic devices included in the first group as a GO of a new group (e.g., third group). When determining a GO of a new group, the processor 420 is operable to determine the GO in the same manner as a method of determining the GO of the second group. The processor 420 is operable to control the communication circuit 410 to transmit information related to the new group to the GO of the new group. Information related to the new group may include information (or message) indicating that the receiving electronic device is designated as a GO of the new group and/or information indicating electronic devices (e.g., the external electronic devices 231 and 233) to be included in the new group or electronic devices (e.g., the external electronic devices 231 and 233) to operate as GCs of a new group. The processor 420 is operable to transmit information indicating the GO of the new group to electronic devices to operate as GCs of the new group.

As the processor 420 identifies (or detects) that a new external electronic device is added to (or joins) the first group 200, the processor 420 is operable to perform a series of operations of enabling the new external electronic device to be added (or joined) to the second group. The processor 420 is operable to control the communication circuit 410 to transmit information indicating a new external electronic device to the first electronic device 210 operating as a GO of the second group and control the communication circuit 410 to transmit information indicating the GO of the second group to the new external electronic device.

In the case that a connection between at least one electronic device (e.g., the external electronic device 231) and the second electronic device 220 among electronic devices included in the first group 200 is released, the processor 420 is operable to control the communication circuit 410 to transmit information indicating that a connection between at least one electronic device (e.g., the external electronic device 231) and the second electronic device 220 is released to the first electronic device 210. The first electronic device 210 is operable to receive information indicating that a connection between at least one electronic device (e.g., the external electronic device 231) and the second electronic device 220 is released, and identify the connection between the at least one electronic device (e.g., the external electronic device 231) and the first electronic device 210. In the case that the connection between at least one electronic device (e.g., the external electronic device 231) and the first electronic device 210 is maintained, the first electronic device 210 is operable to enable at least one electronic device (e.g., the external electronic device 231) to rejoin the first group. For example, the first electronic device 210 is operable to transmit a message requesting that at least one electronic device (e.g., the external electronic device 231) transmits a join request message to the second electronic device 220 to at least one electronic device (e.g., the external electronic device 231).

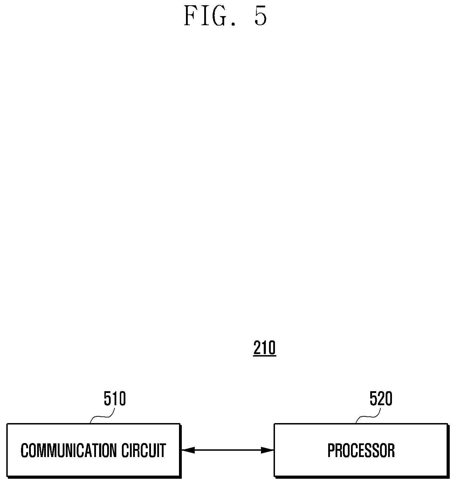

FIG. 5 is a block diagram illustrating a first electronic device according to an embodiment.

The first electronic device (e.g., the first electronic device 210 of FIG. 2) includes a communication circuit (e.g., the wireless communication module 192 of FIG. 1) 510 and a processor (e.g., the processor 120 of FIG. 1) 520.

The communication circuit 510 includes various circuit structures used for modulating and/or demodulating signals within the first electronic device 210. For example, the communication circuit 510 is operable to modulate a baseband signal into a radio frequency (RF) band signal so as to output through an antenna (not illustrated) or demodulate an RF band signal received through an antenna into a baseband signal and transmit the baseband signal to the processor 520.

The communication circuit 510 is operable to perform short-range wireless communication through a first frequency band (e.g., 2.4 GHz), a second frequency band (e.g., 5 GHz), which is a frequency band higher than the first frequency band, and/or a third frequency band (e.g., 6GHz), which is a frequency band higher than the second frequency band.

The processor 520 is operatively connected to the communication circuit 510 to control an operation of the communication circuit 510. At least some of operations of the processor 520 described below may be performed using the communication circuit 510. The processor 520 is operable to execute (or perform) instructions stored on the memory (e.g., the memory 130 of FIG. 1) to perform operations described below.

While the first electronic device 210 operates as a group client (GC) of the first group (e.g., the first group 200 of FIG. 2) including the second electronic device 220, the first electronic device 210, and/or external electronic devices (e.g., the external electronic devices 231 and 233 of FIG. 2), the processor 520 is operable to control the communication circuit 410 to communicate with the electronic devices (e.g., the first electronic device 210, the external electronic devices 231 and 233 of FIG. 2) included in the first group 200. When generating the first group 200, the processor 520 is operable to perform communication using a frequency band (e.g., first frequency band, second frequency band, and/or third frequency band) and/or a bandwidth (e.g., 20 MHz, 40 MHz) determined by the second electronic device 220. The electronic devices (e.g., the first electronic device 210, the external electronic devices 231 and 233) included in the first group 200 arew operable to operate as a group client (GC) of the first group 200, and the electronic devices (e.g., the first electronic device 210, the external electronic devices 231 and 233) included in the first group 200 are operable to perform communication using a frequency band and/or a bandwidth determined by a GO of the first group 200 or the second electronic device 220.

While the first electronic device 210 operates as a GC of the first group 200, the processor 520 is operable to perform an operation of enabling electronic devices (e.g., the first electronic device 210, the external electronic devices 231 and 233) included in the first group 200 to generate a second group different from the first group 200.

The second group refers to a group activated according to release (or disappearance, termination) of the first group 200. The second group may be referred to as a sub-group, a preliminary group, or a secondary group. The electronic devices included in the second group include at least some of electronic devices other than the second electronic device 220 operating as a group owner (GO) of the first group 200 among electronic devices included in the first group 200.

In the case that the first group 200 is released, the second group is a group that may be converted to (or maintained in) an activated state. As the electronic devices (e.g., the first electronic device 210, the external electronic devices 231 and 233) included in the second group detect release of the first group, the electronic devices are operable to perform communication using a frequency band and/or a bandwidth configured to the second group and prevent a communication delay time from occurring until a group for short-range wireless communication is re-generated as release of the first group.

In the case that the first group 200 is not released, the second group may exist (or be maintained) in an inactive state, and electronic devices (e.g., the first electronic device 210, the external electronic devices 231 and 233) included in the second group are operable to perform short-range wireless communication using a frequency band and/or a bandwidth configured to the first group 200.

The processor 520 is operable to receive information related to the second group from the second electronic device 220. The information related to the second group may include information (or message) indicating that the first electronic device 210 is designated as a GO of the second group and/or information indicating electronic devices (e.g., the external electronic devices 231 and 233) to be included in the second group or electronic devices (e.g., the external electronic devices 231 and 233) to operate as GCs of the second group.

Information (or message) indicating that the first electronic device 210 is designated as a GO of the second group may include information indicating a frequency band and a frequency bandwidth to be used for communication of the second group. Information indicating electronic devices (e.g., the external electronic devices 231 and 233) to operate as GCs of the second group may include identification information (e.g., MAC address, name, and /or various information that may identify the electronic device) of electronic devices to operate as GCs of the second group.

The processor 520 is operable to generate (or constitute, configure) the second group based on information related to the second group. After generating the second group, the processor 520 may perform an operation of adding electronic devices (e.g., the external electronic devices 231 and 233) operating as GCs in the first group to the second group.

According to an example, the processor 520 is operable to transmit a join request message (or invite message) of the second group to electronic devices (e.g., the external electronic devices 231 and 233) to operate as GCs of the second group based on information indicating electronic devices (e.g., the external electronic devices 231 and 233) to operate as GCs of the second group included in information related to the second group. The processor 520 is operable to transmit a join request message (or invite message) of the second group to electronic devices (e.g., the external electronic devices 231 and 233) to operate as GCs of the second group through the frequency band used by the second group. The processor 520 is operable to transmit a join request message (or invite message) of the second group to electronic devices (e.g., the external electronic devices 231 and 233) to operate as GCs of the second group using information indicating electronic devices (e.g., the external electronic devices 231 and 233) to operate as GCs of the second group and received from the second electronic device 220. The join request message (or invite message) of the second group may be included in a management frame (e.g., action frame) rather than a data frame and be transmitted. According to an example, the processor 520 may transmit a join request message (or invite message) of the second group without the intervention (e.g., without going through an electronic device (e.g., the second electronic device 220) operating as a GO of the first group) of an electronic device (e.g., the second electronic device 220) operating as a GO of the first group to electronic devices (e.g., the external electronic devices 231 and 233) to operate as GCs of the second group. As electronic devices (e.g., the external electronic devices 231 and 233) to operate as GCs of the second group receive a join request message (or invite message) of the second group transmitted by the first electronic device 210, the electronic devices are operable to perform an operation of adding to the second group. The electronic devices (e.g., the external electronic devices 231 and 233) to operate as GCs of the second group may maintain a connection to the first group even if they are added to the second group.

The processor 520 is operable to transmit a join request message (or invite message) of the second group through a frequency band used by the second group or a frequency band used by the first group to electronic devices (e.g., the external electronic devices 231 and 233) to operate as GCs of the second group.

According to an example, the processor 520 is operable to receive an invite request message transmitted by electronic devices (e.g., the external electronic devices 231 and 233) to operate as GCs of the second group. The processor 520 is operable to identify whether the electronic device that has transmitted the invite request message is included in information indicating electronic devices (e.g., the external electronic devices 231 and 233) to operate as GCs of the second group included in information related to the second group and perform a series of operations of adding the electronic device that has transmitted the invite request message to the second group based on the identification result.

The processor 520 is operable to identify whether the first group 200 is released or a connection with the second electronic device 220 operating as a GO of the first group 200 is released and communicate with electronic devices (e.g., the external electronic devices 231 and 233) included in the second group based on the identification result.

When determining whether the first group 200 is released, in the case that the processor 520 receives a message (e.g., deauthentication) indicating that the first group 200 transmitted by the second electronic device 220 operating as a GO of the first group 200 is released, the processor 520 is operable to identify that the first group 200 is released.

Alternatively, in the case that the processor 520 does not receive a message (e.g., keep-alive message) exchanged at a designated period in order to identify whether the first group 200 is maintained, the processor 520 is operable to identify that a connection with the second electronic device 220 is released. As a connection with the second electronic device 220 is released, the processor 520 is operable to transmit a message (or signal) indicating to perform communication through the second group to the electronic devices included in the second group and communicate with electronic devices included in the first group 200 in the second group. In the case that the first group is released, the first electronic device 210 is operable to transmit and/or receive data through the second group, thereby reducing the time required to generate a new group after release of the first group.

As the first group 200 is released and/or a connection with the second electronic device 220 is released, the processor 520 is operable to change the frequency band configured to the second group.

According to an example, when determining a frequency band of the second group, the second electronic device 220 is operable to determine a frequency band lower than that of the first group to the frequency band of the second group. According to an example, in the case that the frequency band of the first group is 5 GHz, the second electronic device 220 is operable to determine the frequency band of the second group to 2.4 GHz. In the case that the first group is activated (or maintained), considering that the second group is a secondary group that is not actually used, in order to reduce power consumed by electronic devices included in the second group, the second electronic device 220 is operable to determine the frequency band of the second group to a frequency band lower than that of the first group.

As the first group 200 is released and/or a connection with the second electronic device 220 is released, the processor 520 is operable to change the frequency band configured to the second group to be substantially the same as the frequency band configured to the first group, thereby implementing a communication speed through the second group to be substantially the same as a communication speed through the first group.

The processor 520 is operable to change the existing frequency band configured to the second group (or the frequency band of the second group configured by the second electronic device 220) to be the same as the first frequency band configured to the first group and transmit (or broadcast) a signal (e.g., channel switch announcement (CSA)) including information indicating that the frequency band configured to the second group is changed and/or information indicating the changed frequency band to the external electronic devices 231 and 233 included in the second group. The external electronic devices 231 and 233 is operable to perform communication between electronic devices included in the second group through the changed frequency band according to a signal (e.g., channel switch announcement (CSA)) including information indicating that the frequency band configured to the second group is changed and/or information indicating the changed frequency band.

As the first group 200 is not released or a connection with the second electronic device 220 is maintained, the processor 520 is operable to communicate with the first electronic device 210 and/or the external electronic devices 231 and 233 through the frequency band supported by the first group rather than the second group.

As a new external electronic device is added to the first group 200, the processor 520 is operable to receive information indicating the new external electronic device from the first electronic device 210. Information indicating the new external electronic device may include identification information of the new external electronic device and an address (e.g., MAC address, IP address) of the new external electronic device. In the case of receiving an invite request message of the second group from the new external electronic device, the processor 520 is operable to perform a series of operations to adding (or joining) the new external electronic device to the second group. Alternatively, the processor 520 is operable to transmit an invite message of the second group to the new external electronic device, thereby performing a series of operations of adding (or joining) the new external electronic device to the second group.

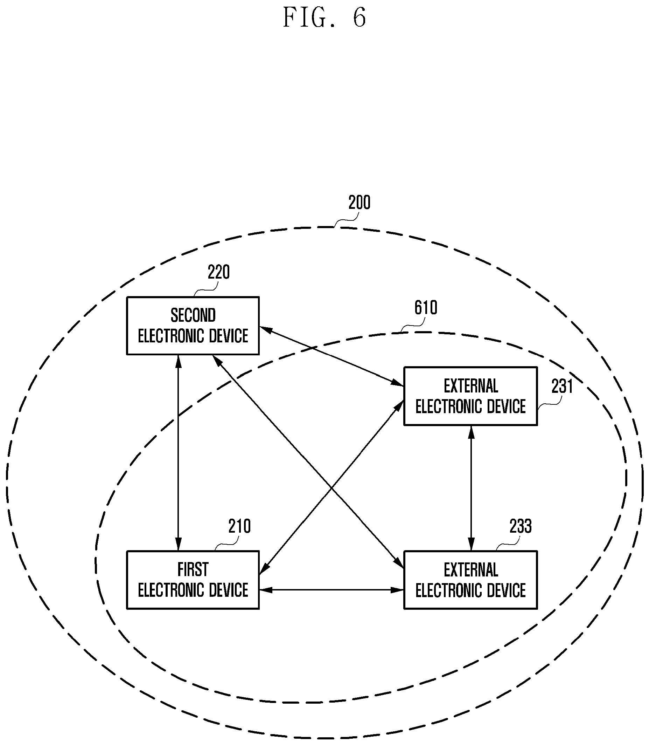

FIG. 6 is a diagram illustrating an example in which a first electronic device generates a second group according to an embodiment.

According to an example, the first electronic device (e.g., the electronic device 101 of FIG. 1) 210 and/or the second electronic device (e.g., the electronic device 101 of FIG. 1) 220 is included in the first group 200 for short-range wireless communication to communicate with electronic devices (e.g., the first electronic device 210, the second electronic device 220, and the external electronic devices 231 and 233) included in the first group 200.

The first group 200 refers to a group that supports device to device (D2D) communication through short-range wireless communication between electronic devices included in the first group. According to an example, short-range wireless communication includes Wi-Fi direct, and the first group 200 is a group generated using a method defined in Wi-Fi direct and is referred to as various names such as a P2P group and a Wi-Fi direct group.

The electronic devices (e.g., the first electronic device 210, the second electronic device 220, and the external electronic devices 231 and 233) included in the first group 200 are connected directly through short-range wireless communication without going through separate entities (e.g., access point (AP)). According to an example, electronic devices (e.g., the first electronic device 210, the second electronic device 220, and the external electronic devices 231 and 233) included in the P2P group are connected based on Wi-Fi direct standard defined in a Wi-Fi alliance (WFA).

While the second electronic device 220 operates as a GO of the first group 200, the second electronic device 220 performs an operation of enabling electronic devices (e.g., the first electronic device 210, the external electronic devices 231 and 233) included in the first group 200 to generate a second group 610 different from the first group 200.

The second group 610 refers to a group activated according to release (or disappearance or termination) of the first group 200. The second group 610 is referred to as a sub-group, a preliminary group, or a secondary group. The electronic devices included in the second group 610 include at least some of electronic devices other than the second electronic device 220 operating as a group owner (GO) of the first group 200 among electronic devices included in the first group 200.

In the case that the first group 200 is released, the second group 610 is a group that may be converted to (or maintained in) an activated state. As the electronic devices (e.g., the first electronic device 210, the external electronic devices 231 and 233) included in the second group 610 detect release of the first group, the electronic devices perform communication using a frequency band and/or a bandwidth configured to the second group 610, and prevent a communication delay time from occurring until a group for short-range wireless communication is re-generated as release of the first group.

In the case that the first group 200 is not released, the second group 610 ay exists (or be maintained) in an inactive state, and electronic devices (e.g., the first electronic device 210, the external electronic devices 231 and 233) included in the second group 610 perform short-range wireless communication using a frequency band and/or a bandwidth configured to the first group 200.

When generating the second group 610, the second electronic device 220 determines (or select) an electronic device to operate as a group owner (GO) of the second group 610 among electronic devices operating as GCs of the first group 200.

According to an example, when determining (or selecting) an electronic device to operate as a GO of the second group 610, the second electronic device 220 determines (or select) an electronic device to operate as a GO of the second group 610 based on the characteristics of electronic devices included in the first group 200.

According to an example, the characteristics of the electronic device include performance information of the electronic device. Performance information of the electronic device may include a response speed. The response speed of the electronic device is determined based on the difference between a transmission time of a message (or data, signal) transmitted by the second electronic device 220 and a reception time of a response message (or data or signal) corresponding to the message transmitted by the second electronic device 220. The second electronic device 220 determines an electronic device in which a response speed satisfies a designated condition (e.g., a condition in which a response speed is greater than or equal to a designated magnitude or a condition with the fastest response speed) among electronic devices (e.g., the first electronic device 210, the external electronic devices 231 and 233) operating as GCs of the first group 200 as a GO of the second group 610.

According to an example, the characteristics of the electronic device include a value of a GO intent of the electronic device. The second electronic device 220 determines an electronic device in which a GO intent satisfies a designated condition (e.g., a condition with the highest GO intent) among electronic devices (e.g., the first electronic device 210, the external electronic devices 231 and 233) operating as GCs of the first group 200 as a GO of the second group 610.

According to an example, the characteristics of the electronic device include a state in which the electronic device is connected to an external power source (or charger). The second electronic device 220 determines an electronic device connected to an external power source among electronic devices (e.g., the first electronic device 210, the external electronic devices 231 and 233) operating as GCs of the first group 200 as a GO of the second group 610. Among electronic devices (e.g., the first electronic device 210, the external electronic devices 231 and 233) operating as GCs of the first group 200, electronic devices connected to an external power source may be less sensitive to battery consumption and provide a stable communication connection compared to electronic devices not connected to an external power source. Accordingly, the second electronic device 220 may determine an electronic device connected to an external power source among electronic devices (e.g., the first electronic device 210, the external electronic devices 231 and 233) operating as GCs of the first group 200 as a GO of the second group 610, thereby implementing a stable connection of the second group 610.

According to an example, the characteristics of the electronic device include a position of the electronic device. The second electronic device 220 determines an electronic device existing at a position that may perform a stable connection of the second group 610 among electronic devices (e.g., the first electronic device 210, the external electronic devices 231 and 233) operating as GCs of the first group 200 as a GO of the second group 610. According to an example, the second electronic device 220 identifies positions of electronic devices to be included in the second group 610 and determines an electronic device existing at a position closest to a center area of the second group 610 as a GO of the second group 610, thereby implementing a stable connection of the second group 610.

According to an example, the characteristics of the electronic device include the degree to which the electronic device moves. The second electronic device 220 determines an electronic device with the least movement among electronic devices (e.g., the first electronic device 210, the external electronic devices 231 and 233) operating as GCs of the first group 200 as a GO of the second group 610, thereby implementing a stable connection of the second group 610.

According to an example, when determining (or selecting) an electronic device to operate as a GO of the second group 610, the second electronic device 220 determines an electronic device designated by the user's selection and/or an application or a service running on the second electronic device 220 as a GO of the second group 610.

According to an example, when determining (or selecting) an electronic device to operate as a GO of the second group 610, the second electronic device 220 determines a GO of the second group 610 based on the timepoint of joining (or adding to) the first group. The second electronic device 220 determines an electronic device with the earliest timepoint of joining (or adding to) the first group as a GO of the second group 610 or determines an electronic device with the latest timepoint of j oining (or adding to) the first group as a GO of the second group 610.

The timing (or timepoint) at which the second electronic device 220 performs an operation of determining (or selecting) an electronic device to operate as a GO of the second group may be implemented in various ways.

According to an example, in the case that the number of electronic devices (e.g., the first electronic device 210, the external electronic devices 231 and 233) included in the first group is equal to or greater than (or exceeds) the designated number (e.g., 2 or 3), the second electronic device 220 determines to generate a second group, and determine an electronic device to operate as a GO of the second group.

Hereinafter, for convenience of description, it is assumed that the second electronic device 220 has determined an electronic device to operate as a GO of the second group 610 to the first electronic device 210.

The second electronic device 220 transmits information related to the second group 610 to a GO (e.g., the first electronic device 210) of the second group 610. The information related to the second group 610 includes information (or message) indicating that the first electronic device 210 is designated as a GO of the second group 610 and/or information indicating electronic devices (e.g., the external electronic devices 231 and 233) to be included in the second group 610 or electronic devices (e.g., the external electronic devices 231 and 233) to operate as GCs of the second group 610.

The information (or message) indicating that the first electronic device 210 is designated as a GO of the second group 610 includes information indicating a frequency band and a frequency bandwidth to be used for communication of the second group 610. Information indicating electronic devices (e.g., the external electronic devices 231 and 233) to operate as GCs of the second group 610 includes identification information (e.g., MAC address, name, and/or various information that may identify the electronic device) of electronic devices to operate as GCs of the second group 610.

The second electronic device 220 transmits information indicating a GO (e.g., the first electronic device 210) of the second group 610 to electronic devices (e.g., the external electronic devices 231 and 233) to operate as GCs of the second group 610.

As the second electronic device 220 receives a message (or signal) indicating that generation (or constitution or configuration) of the second group 610 is completed from the first electronic device 210, the second electronic device 220 transmits information indicating a GO (e.g., the first electronic device 210) of the second group 610 to electronic devices (e.g., the external electronic devices 231 and 233) to operate as GCs of the second group 610. Alternatively, even if the second electronic device 220 does not receive a message (or signal) indicating that generation (or constitution, configuration) of the second group 610 is completed from the first electronic device 210, the second electronic device 220 transmits information indicating a GO (e.g., the first electronic device 210) of the second group 610 to electronic devices (e.g., the external electronic devices 231 and 233) to operate as GCs of the second group 610.

The information indicating a GO (e.g., the first electronic device 210) of the second group 610 includes identification information of the GO of the second group 610 and information indicating a frequency band and a frequency bandwidth to be used for communication of the second group 610.

Electronic devices (e.g., the external electronic devices 231 and 233) to operate as GCs of the second group 610 participate in (or join) the second group 610 through the frequency band to be used for communication of the second group 610.

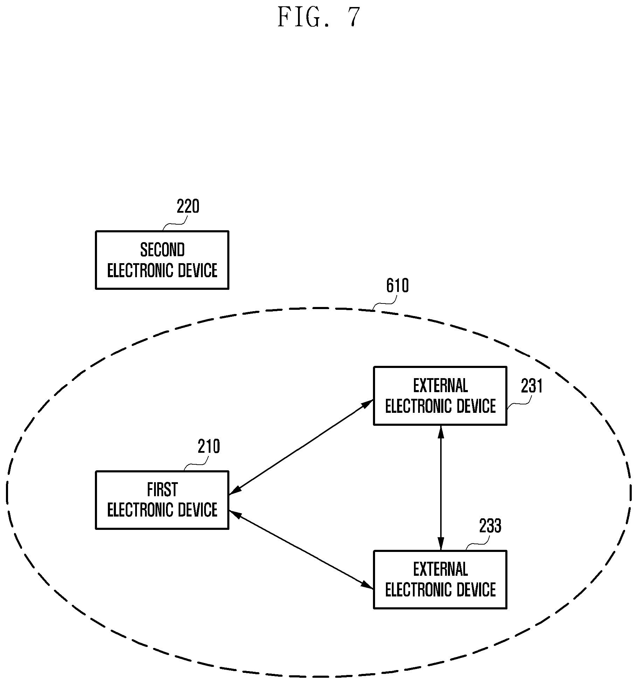

FIG. 7 is a diagram illustrating an example in which a first electronic device communicates with external electronic devices included in a second group according to release of a first group according to an embodiment.

The first electronic device 210 identifies whether the first group 200 is released or a connection with the second electronic device 220 operating as a GO of the first group 200 is released, and communicates with electronic devices (e.g., the external electronic devices 231 and 233) included in the second group 610 based on the identification result.

When the first electronic device 210 determines whether to release the first group 200, in the case that the first electronic device 210 receives a message (e.g., deauthentication) indicating release of the first group 200 transmitted by the second electronic device 220 operating as a GO of the first group 200, the first electronic device 210 identifies that the first group 200 is released.

Alternatively, in the case that the first electronic device 210 does not receive a message (e.g., keep-alive message) exchanged at a designated period in order to identify whether the first group 200 is maintained, the first electronic device 210 identifies that a connection with the second electronic device 220 is released. As a connection with the second electronic device 220 is released, the first electronic device 210 transmits a message (or signal) indicating to perform communication through the second group 610 to electronic devices included in the second group 610, and communicate with electronic devices included in the first group 200 in the second group 610. In the case that the first group is released, the first electronic device 210 transmits and/or receives data through the second group 610, thereby reducing the time taken to generate a new group after the first group is released.

As the first group 200 is released and/or a connection with the second electronic device 220 is released, the first electronic device 210 changes the frequency band configured to the second group 610.

According to an example, when determining a frequency band of the second group 610, the second electronic device 220 determines a frequency band lower than that of the first group to the frequency band of the second group 610. According to an example, in the case that the frequency band of the first group is 5 GHz, the second electronic device 220 determines the frequency band of the second group to 2.4 GHz. In the case that the first group is activated (or maintained), considering that the second group 610 is a secondary group that is not actually used, in order to reduce power consumed by electronic devices included in the second group 610, the second electronic device 220 determines the frequency band of the second group 610 to a frequency band lower than that of the first group.

As the first group 200 is released and/or a connection with the second electronic device 220 is released, the first electronic device 210 changes a frequency band configured to the second group 610 to be substantially the same as a frequency band configured to the first group, thereby implementing a communication speed through the second group 610 to be substantially the same as a communication speed through the first group.

As the first group 200 is not released or a connection with the second electronic device 220 is maintained, the first electronic device 210 communicates with the first electronic device 210 and/or the external electronic devices 231 and 233 through the frequency band supported by the first group rather than the second group 610.

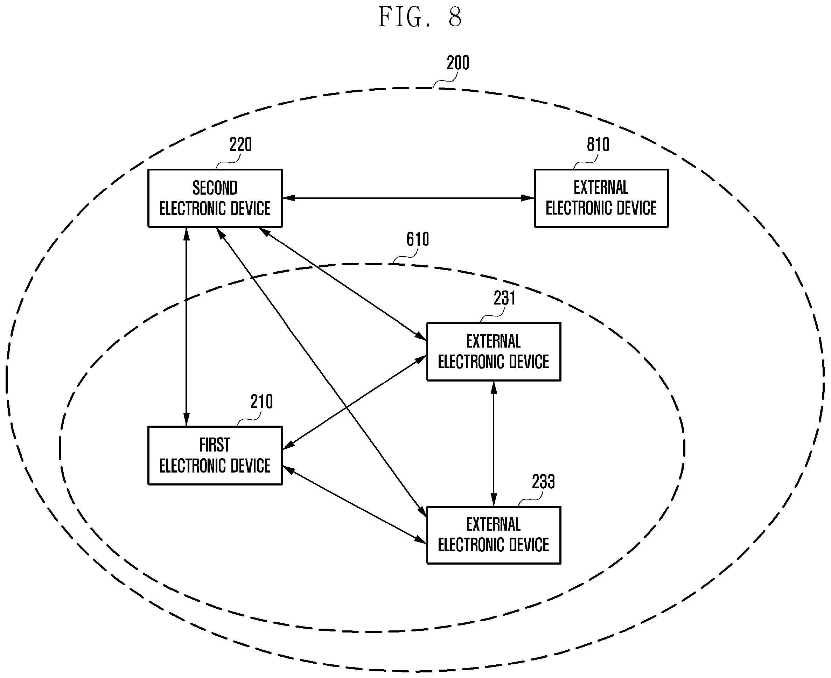

FIG. 8 is a diagram illustrating an example in which a first electronic device joins a new external electronic device to a second group as the new external electronic device joins a first group according to an embodiment.

As the second electronic device 220 identifies (or detects) that an external electronic device 810 is added to (or joins) the first group 200, the second electronic device 220 performs a series of operations of enabling the external electronic device 810 to be added (or to be joined) to the second group 610. The second electronic device 220 transmits information indicating the external electronic device 810 to the first electronic device 210 operating as a GO of the second group 610 and transmit information indicating the GO of the second group to the external electronic device 810.

Information indicating the external electronic device 810 includes identification information of the external electronic device 810 and/or an address (e.g., MAC address and/or IP address) of the external electronic device 810.

In the case that the first electronic device 210 receives an invite request message of the second group 610 from the external electronic device 810, the first electronic device 210 performs a series of operations of adding (or joining) the external electronic device 810 to the second group 610. Alternatively, the first electronic device 210 transmits an invite message of the second group 610 to the external electronic device 810, thereby performing a series of operations of adding (or j oining) the external electronic device 810 to the second group 610.

The first electronic device 210 transmits an invite message of the second group to the external electronic device 810 through the frequency band used by the second group. The first electronic device 210 transmits an invite message of the second group to the external electronic device 810 using information indicating the external electronic device 810 and received from the second electronic device 220. The invite message of the second group is included in a management frame (e.g., action frame) and be transmitted. According to an example, the first electronic device 210 transmits an invite message for the second group to the external electronic device 810 without the intervention (or without going through the second electronic device 220) of the second electronic device 220, which is an electronic device operating as a GO of the first group.

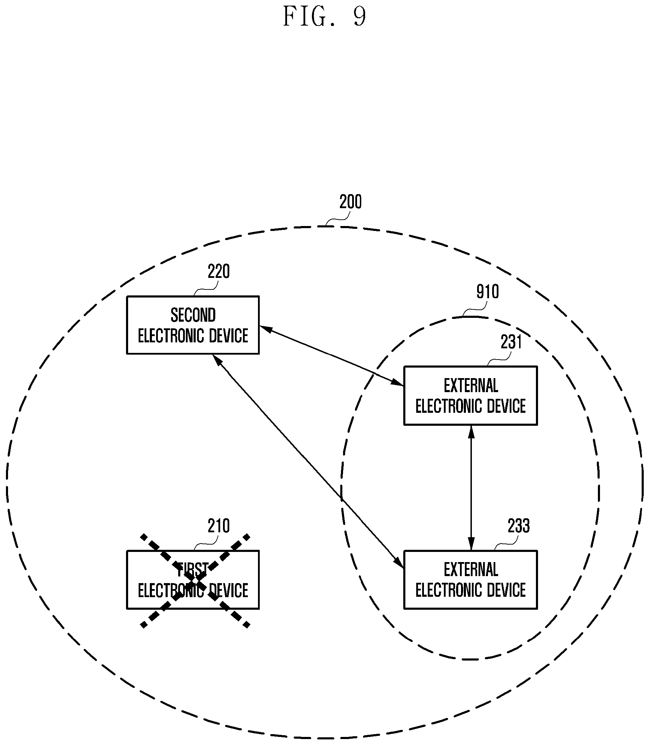

FIG. 9 is a diagram illustrating an example in which a second electronic device 220 generates a new secondary group (e.g., third group) among external electronic devices 231 and 233 included in the first group 200 as a connection with a first electronic device 210 is terminated according to an embodiment.

In the case that the second electronic device 220 detects that a connection with the first electronic device 210 operating as a GO of the second group is released, the second electronic device 220 generates a third group different from the second group.

A third group 910 refers to a group activated according to release (or disappearance, termination) of the first group 200. The third group 910 may be referred to as a sub-group, a preliminary group, or a secondary group. Electronic devices included in the third group 910 include at least some of electronic devices (e.g., the external electronic devices 231 and 233) other than the second electronic device 220 operating as a group owner (GO) of the first group 200 among electronic devices included in the first group 200 and the first electronic device 210 operating as a GO of the second group 610.

In the case that the first group 200 is released, the third group 910 is a group that may be converted to (or maintained in) an activated state. As the electronic devices (e.g., the external electronic devices 231 and 233) included in the third group 910 detect release of the first group 200, the electronic devices perform communication using a frequency band and/or a bandwidth configured to the third group 910 and prevent a communication delay time from occurring until a group for short-range wireless communication is re-generated as release of the first group 200.

In the case that the first group 200 is not released, the third group 910 exists (or be maintained) in an inactive state, and electronic devices (e.g., the external electronic devices 231 and 233) included in the third group 910 perform short-range wireless communication using a frequency band and/or a bandwidth configured to the first group 200.

The second electronic device 220 determines an external electronic device other than the first electronic device 210 among electronic devices included in the first group as a GO of a new group (e.g., the third group 910). When determining the GO of a new group, the second electronic device 220 determines the GO in the same manner as the method of determining the GO of the second group.

According to an example, when determining (or selecting) an electronic device to operate as a GO of the third group 910, the second electronic device 220 determines (or select) an electronic device to operate as a GO of the third group 910 based on the characteristics of the electronic devices included in the first group 200.

According to an example, the characteristics of the electronic device include performance information of the electronic device. Performance information of the electronic device includes a response speed. The response speed of the electronic device is determined based on the difference between a transmission time of a message (or data or signal) transmitted by the second electronic device 220 and a reception time of a response message (or data or signal) corresponding to the message transmitted by the second electronic device 220. The second electronic device 220 determines an electronic device in which a response speed satisfies a designated condition (e.g., a condition in which a response speed is greater than or equal to a designated magnitude or a condition with the fastest response speed) among electronic devices (e.g., the external electronic devices 231 and 233) other than the first electronic device 210 among electronic devices operating as GCs of the first group 200 as a GO of the third group 910.

According to an example, the characteristics of the electronic device include a value of a GO intent of the electronic device. The second electronic device 220 determines an electronic device in which a GO intent satisfies a designated condition (e.g., a condition with the highest GO intent) among electronic devices (e.g., the external electronic devices 231 and 233) other than the first electronic device 210 among electronic devices operating as GCs of the first group 200 as a GO of the third group 910.

According to an example, the characteristics of the electronic device include a state in which the electronic device is connected to an external power source (or charger). The second electronic device 220 determines an electronic device to an external power source among electronic devices (e.g., the external electronic devices 231 and 233) other than the first electronic device 210 among electronic devices operating as GCs of the first group 200 as a GO of the third group 910. Among electronic devices operating as GCs of the first group 200, electronic devices connected to an external power source among electronic devices (e.g., the external electronic devices 231 and 233) other than the first electronic device 210 may be less sensitive to battery consumption and provide a stable communication connection compared to electronic devices not connected to electronic devices. Accordingly, the second electronic device 220 determines an electronic device connected to the external power source among electronic devices (e.g., the external electronic devices 231 and 233) other than the first electronic device 210 among electronic devices operating as GCs of the first group 200 as a GO of the third group 910, thereby implementing a stable connection of the third group 910.

According to an example, the characteristics of the electronic device include a position of the electronic device. The second electronic device 220 determines an electronic device existing at a position that may perform a stable connection of the third group 910 among electronic devices (e.g., the external electronic devices 231 and 233) other than the first electronic device 210 among electronic devices operating as GCs of the first group 200 as a GO of the third group 910. According to an example, the second electronic device 220 identifies positions of electronic devices to be included in the third group 910 and determines an electronic device existing at a position closest to a center area of the third group 910 as a GO of the third group 910, thereby implementing a stable connection of the third group 910.

According to an example, the characteristics of the electronic device include the degree to which the electronic device moves. The second electronic device 220 determines an electronic device with the least movement among electronic devices (e.g., the external electronic devices 231 and 233) other than the first electronic device 210 among electronic devices operating as GCs of the first group 200 as a GO of the third group 910, thereby implementing a stable connection of the third group 910.

According to an example, when determining (or selecting) an electronic device to operate as a GO of the third group 910, the second electronic device 220 determines an electronic device designated by the user's selection and/or an application or a service running on the second electronic device 220 as the GO of the third group 910.

According to an example, when determining (or selecting) an electronic device to operate as a GO of the third group 910, the second electronic device 220 determines a GO of the third group 910 based on the timepoint joined (or added) to the first group. The second electronic device 220 determines an electronic device with the earliest timepoint of j oining (or adding to) the first group as a GO of the third group 910 or determines an electronic device with the latest timepoint of j oining (or adding to) the first group as a GO of the third group 910.

The timing (or timepoint) at which the second electronic device 220 performs an operation of determining (or selecting) an electronic device to operate as a GO of the third group may be implemented in various ways.

According to an example, in the case that the number of electronic devices (e.g., the external electronic devices 231 and 233) included in the third group is equal to or greater than (or exceeds) the designated number (e.g., 2 or 3), the second electronic device 220 determines to generate a third group and determines an electronic device to operate as a GO of the third group.

The second electronic device 220 controls the communication circuit 410 to transmit information related to the third group 910 to the GO (e.g., the external electronic device 231) of the third group 910. Information related to the third group 910 includes information (or message) indicating that the receiving electronic device (e.g., the external electronic device 231) is designated as a GO of the third group 910 and/or information indicating an electronic device (e.g., the external electronic device 233) to be included in the third group 910 or an electronic device (e.g., the external electronic device 233) to operate as a GC of the third group 910. The processor 420 transmits information indicating a GO of the third group 910 to an electronic device (e.g., the external electronic device 233) to operate as a GC of the third group 910 and enables an electronic device to operate as a GC of the third group 910 to be added to (or joined) the third group 910.

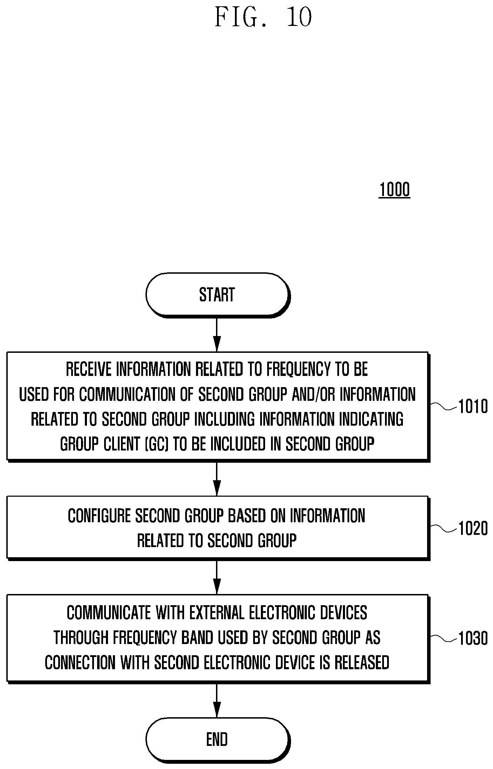

FIG. 10 is a flowchart illustrating a method 1000 of operating a first electronic device according to an embodiment.

In operation 1010, the first electronic device (e.g., the first electronic device 210 of FIG. 5) receives information related to the second group including information related to a frequency to be used for communication of the second group and/or information indicating a group client (GC) to be included in the second group from the second electronic device (e.g., the second electronic device 220 of FIG. 4).

While the first electronic device 210 operates as a group client (GC) of the first group (e.g., the first group 200 of FIG. 2) including the second electronic device 220, the first electronic device 210, and/or the external electronic devices (e.g., the external electronic devices 231 and 233 of FIG. 2), the first electronic device 210 controls the communication circuit 410 to communicate with the electronic devices (e.g., the first electronic device 210, the external electronic devices 231 and 233) included in the first group 200. When generating the first group 200, the first electronic device 210 performs communication using a frequency band (e.g., first frequency band, second frequency band, and/or third frequency band) and/or a bandwidth (e.g., 20 MHz, 40 MHz) determined by the second electronic device 220. The electronic devices (e.g., the first electronic device 210, the external electronic devices 231 and 233) included in the first group 200 operate as group clients (GC) of the first group 200, and the electronic devices (e.g., the first electronic device 210, the external electronic devices 231 and 233) included in the first group 200 perform communication using a GO of the first group 200 or a frequency band and/or a bandwidth determined by the second electronic device 220.

While the first electronic device 210 operates as a GC of the first group 200, the first electronic device 210 performs an operation of enabling electronic devices (e.g., the first electronic device 210, the external electronic devices 231 and 233) included in the first group 200 to generate a second group different from the first group 200.

The second group refers to a group activated according to release (or disappearance, termination) of the first group 200. The second group may be referred to as a sub-group, a preliminary group, or a secondary group. The electronic devices included in the second group include at least some of electronic devices other than the second electronic device 200 operating as a group owner (GO) of the first group 200 among electronic devices included in the first group 200.

In the case that the first group 200 is released, the second group is a group that may be converted to (or maintained in) an activated state. As the electronic devices (e.g., the first electronic device 210, the external electronic devices 231 and 233) included in the second group detect release of the first group, the electronic devices perform communication using a frequency band and/or a bandwidth configured to the second group and prevent a communication delay time from occurring until a group for short-range wireless communication is re-generated as release of the first group.

In the case that the first group 200 is not released, the second group exists (or is maintained) in an inactive state, and electronic devices (e.g., the first electronic device 210, the external electronic devices 231 and 233) included in the second group perform short-range wireless communication using a frequency band and/or a bandwidth configured to the first group 200.

The first electronic device 210 receives information related to the second group from the second electronic device 220. The information related to the second group includes information (or message) indicating that the first electronic device 210 is designated as a GO of the second group and/or information indicating electronic devices (e.g., the external electronic devices 231 and 233) to be included in the second group or electronic devices (e.g., the external electronic devices 231 and 233) to operate as GCs of the second group.

Information (or message) indicating that the first electronic device 210 is designated as a GO of the second group includes information indicating a frequency band and/or a frequency bandwidth to be used for communication of the second group. The information indicating electronic devices (e.g., the external electronic devices 231 and 233) to operate as GCs of the second group includes identification information (e.g., MAC address, name, and /or various information that may identify the electronic device) of electronic devices to operate as GCs of the second group.

In operation 1020, the first electronic device 210 configures the second group based on information related to the second group.

The first electronic device 210 generates (or constitute, configure) the second group based on information related to the second group. The first electronic device 210 generates a second group and then performs an operation of adding electronic devices (e.g., the external electronic devices 231 and 233) operating as GCs in the first group to the second group.

According to an example, the first electronic device 210 transmits a join request message (or invite message) of the second group to electronic devices (e.g., the external electronic devices 231 and 233) to operate as GCs of the second group based on information indicating electronic devices (e.g., the external electronic devices 231 and 233) to operate as GCs of the second group included in information related to the second group.

The first electronic device 210 transmits a join request message (or invite message) of the second group to electronic devices (e.g., the external electronic devices 231 and 233) to operate as GCs of the second group through the frequency band used by the second group. The first electronic device 210 transmits a join request message (or invite message) of the second group to electronic devices (e.g., the external electronic devices 231 and 233) to operate as GCs of the second group using information indicating electronic devices (e.g., the external electronic devices 231 and 233) to operate as GCs of the second group and received from the second electronic device 220. The join request message (or invite message) of the second group is included in a management frame (e.g., action frame) rather than a data frame and be transmitted. According to an example, the first electronic device 210 transmits a join request message (or invite message) of the second group to electronic devices (e.g., the external electronic devices 231 and 233) to operate as GCs of the second group without the intervention (or without going through an electronic device (e.g., the second electronic device 220) operating as a GO of the first group) of an electronic device (e.g., the second electronic device 220) operating as a GO of the first group.

The second electronic device 220 transmits a join request message (or invite message) of the second group to electronic devices (e.g., the external electronic devices 231 and 233) to operate as GCs of the second group through a frequency band used by the second group or a frequency band used by the first group.

As the electronic devices (e.g., the external electronic devices 231 and 233) to operate as GCs of the second group receive a join request message (or invite message) of the second group transmitted by the first electronic device 210, the electronic devices perform an operation of adding to the second group. Even if the electronic devices are added to the second group, the electronic devices (e.g., the external electronic devices 231 and 233) to operate as GCs of the second group maintain a connection with the first group.

According to an example, the first electronic device 210 receives an invite request message transmitted by electronic devices (e.g., the external electronic devices 231 and 233) to operate as GCs of the second group. The first electronic device 210 identifies whether an electronic device that has transmitted an invite request message is included in information indicating electronic devices (e.g., the external electronic devices 231 and 233) to operate as GCs of the second group included in information related to the second group and perform a series of operations of adding the electronic device that has transmitted the invite request message to the second group based on the identification result.

In operation 1030, as a connection with the second electronic device 220 is released, the first electronic device 210 communicates with the external electronic devices 231 and 233 through the frequency band used by the second group.

The first electronic device 210 identifies whether the first group 200 is released or a connection with the second electronic device 220 operating as a GO of the first group 200 is released, and communicates with electronic devices (e.g., the external electronic devices 231 and 233) included in the second group based on the identification result.

When determining whether the first group 200 is released, in the case that the first electronic device 210 receives a message (e.g., deauthentication) indicating release of the first group 200 transmitted by the second electronic device 220 operating as a GO of the first group 200, the first electronic device 210 identifies that the first group 200 is released.

Alternatively, in the case that the first electronic device 210 does not receive a message (e.g., keep-alive message) exchanged at a designated period in order to identify whether the first group 200 is maintained, the first electronic device 210 identifies that a connection with the second electronic device 220 is released. As a connection with the second electronic device 220 is released, the first electronic device 210 transmits a message (or signal) indicating to perform communication through the second group to electronic devices included in the second group and communicate with electronic devices included in the first group 200 in the second group. In the case that the first group is released, the first electronic device 210 transmits and/or receives data through the second group, thereby reducing the time required to generate a new group after release of the first group.

As the first group 200 is released and/or a connection with the second electronic device 220 is released, the first electronic device 210 changes the frequency band configured to the second group.

According to an example, when determining a frequency band of the second group, the second electronic device 220 determines a frequency band lower than that of the first group to the frequency band of the second group. According to an example, in the case that the frequency band of the first group is 5 GHz, the second electronic device 220 determines the frequency band of the second group to 2.4 GHz. In the case that the first group is activated (or maintained), considering that the second group is a secondary group that is not actually used, in order to reduce power consumed by electronic devices included in the second group, the second electronic device 220 determines the frequency band of the second group to a frequency band lower than that of the first group.

As the first group 200 is released and/or a connection with the second electronic device 220 is released, the first electronic device 210 changes a frequency band configured to the second group to be substantially the same as the frequency band configured to the first group, thereby implementing a communication speed through the second group to be substantially the same as a communication speed through the first group.

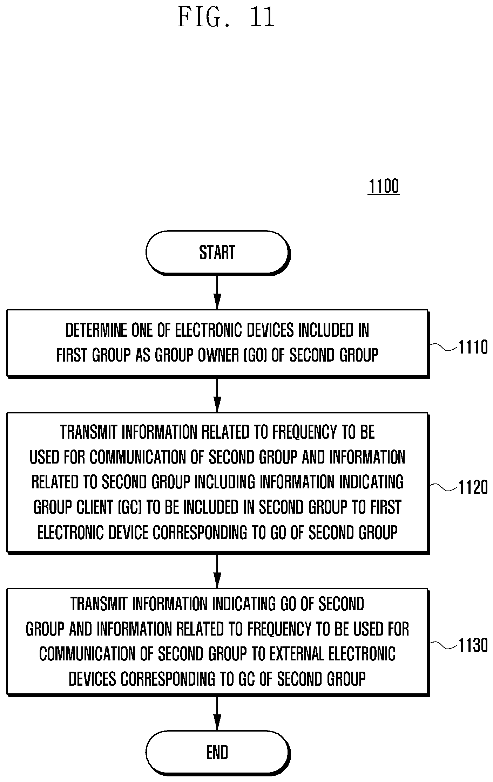

FIG. 11 is a flowchart illustrating a method 1100 of operating a second electronic device according to an embodiment.

In operation 1110, the second electronic device (e.g., the second electronic device 220 of FIG. 4) determines one of electronic devices (e.g., the first electronic device 210 and the external electronic devices 231 and 233 of FIG. 2) included in the first group (e.g., the first group 200 of FIG. 2) as a group owner (GO) of the second group (e.g., the second group 610 of FIG. 6).

The second group 610 refers to a group activated according to release (or disappearance, termination) of the first group 200. The second group 610 may be referred to as a sub-group, a preliminary group, or a secondary group. Electronic devices included in the second group 610 include at least some of electronic devices other than the second electronic device 200 operating as a group owner (GO) of the first group 200 among electronic devices included in the first group 200.

In the case that the first group 200 is released, the second group 610 is a group that may be converted to (or maintained in) an activated state. As the electronic devices (e.g., the first electronic device 210, the external electronic devices 231 and 233) included in the second group 610 detect release of the first group, the electronic devices perform communication using a frequency band and/or a bandwidth configured to the second group 610 and prevent a communication delay time from occurring until a group for short-range wireless communication is re-generated as release of the first group.

In the case that the first group 200 is not released, the second group 610 exists (or be maintained) in an inactive state, and the electronic devices (e.g., the first electronic device 210, the external electronic devices 231 and 233) included in the second group 610 perform short-range wireless communication using a frequency band and/or a bandwidth configured to the first group 200.

When generating the second group 610, the second electronic device 220 determines (or select) an electronic device to operate as a group owner (GO) of the second group 610 among electronic devices operating as GCs of the first group 200.

According to an example, when determining (or selecting) an electronic device to operate as a GO of the second group 610, the second electronic device 220 determines (or select) an electronic device to operate as a GO of the second group 610 based on the characteristics of the electronic devices included in the first group 200.

According to an example, the characteristics of the electronic device include a performance information of the electronic device. The performance information of the electronic device includes a response speed. The response speed of the electronic device is determined based on the difference between a transmission time of a message (or data, signal) transmitted by the second electronic device 220 and a reception time of a response message (or data, signal) corresponding to the message transmitted by the second electronic device 220. The second electronic device 220 determines an electronic device in which a response speed satisfies a designated condition (e.g., a condition in which a response speed is greater than or equal to a designated magnitude, or a condition with the fastest response speed) among electronic devices (e.g., the first electronic device 210, the external electronic devices 231 and 233) operating as GCs of the first group 200 as a GO of the second group 610.

According to an example, the characteristics of the electronic device include a value of a GO intent of the electronic device. The second electronic device 220 determines an electronic device in which a GO intent satisfies a designated condition (e.g., a condition with the highest GO intent) among electronic devices (e.g., the first electronic device 210, the external electronic devices 231 and 233) operating as GCs of the first group 200 as a GO of the second group 610.

According to an example, the characteristics of the electronic device include a state in which the electronic device is connected to an external power source (or charger). The second electronic device 220 determines an electronic device connected to an external power source among electronic devices (e.g., the first electronic device 210, the external electronic devices 231 and 233) operating as GCs of the first group 200 as a GO of the second group 610. Among electronic devices (e.g., the first electronic device 210, the external electronic devices 231 and 233) operating as GCs of the first group 200, electronic devices connected to an external power source are less sensitive to battery consumption and provide a stable communication connection compared to electronic devices not connected to an external power source. Accordingly, the second electronic device 220 determines an electronic device connected to an external power source among electronic devices (e.g., the first electronic device 210, the external electronic devices 231 and 233) operating as GCs of the first group 200 as a GO of the second group 610, thereby implementing a stable connection of the second group 610.

According to an example, the characteristics of the electronic device include a position of the electronic device. The second electronic device 220 determines an electronic device existing at a position that may perform a stable connection of the second group 610 among electronic devices (e.g., the first electronic device 210, the external electronic devices 231 and 233) operating as GCs of the first group 200 as a GO of the second group 610. According to an example, the second electronic device 220 identifies positions of electronic devices to be included in the second group 610 and determines an electronic device existing at a position closest to a center area of the second group 610 as a GO of the second group 610, thereby implementing a stable connection of the second group 610.

According to an example, the characteristics of the electronic device include the degree to which the electronic device moves. The second electronic device 220 determines an electronic device with the least movement among electronic devices (e.g., the first electronic device 210, the external electronic devices 231 and 233) operating as GCs of the first group 200 as a GO of the second group 610, thereby implementing a stable connection of the second group 610.

According to an example, when determining (or selecting) an electronic device to operate as a GO of the second group 610, the second electronic device 220 determines an electronic device designated by the user's selection and/or an application or a service running on the second electronic device 220 as a GO of the second group 610.

According to an example, when determining (or selecting) an electronic device to operate as a GO of the second group 610, the second electronic device 220 determines a GO of the second group 610 based on the timepoint of joining (or adding to) the first group. The second electronic device 220 determines an electronic device with the earliest timepoint of joining (or adding to) the first group as a GO of the second group 610 or determines an electronic device with the latest timepoint of joining (or adding to) the first group as a GO of the second group 610.

The timing (or timepoint) at which the second electronic device 220 performs an operation of determining (or selecting) an electronic device to operate as a GO of the second group is implemented in various ways.

According to an example, in the case that the number of electronic devices (e.g., the first electronic device 210, the external electronic devices 231 and 233) included in the first group is equal to or greater than (or exceeds) the designated number (e.g., 2 or 3), the second electronic device 220 determines to generate a second group, and determines an electronic device to operate as a GO of the second group.

Hereinafter, for convenience of description, it is assumed that the second electronic device 220 has determined an electronic device to operate as a GO of the second group 610 to the first electronic device 210.

In operation 1120, the second electronic device 220 transmits information related to the second group including information related to a frequency to be used for communication of the second group 610 and information indicating a group client (GC) to be included in the second group 610 to the first electronic device 210 corresponding to the GO of the second group 610.

The second electronic device 220 transmits information related to the second group 610 to the GO (e.g., the first electronic device 210) of the second group 610. The information related to the second group 610 includes information (or message) indicating that the first electronic device 210 is designated as a GO of the second group 610 and/or information indicating electronic devices (e.g., the external electronic devices 231 and 233) to be included in the second group 610 or electronic devices (e.g., the external electronic devices 231 and 233) to operate as GCs of the second group 610.

The information (or message) indicating that the first electronic device 210 is designated as a GO of the second group 610 includes information indicating a frequency band and/or a frequency bandwidth to be used for communication of the second group 610. Information indicating electronic devices (e.g., the external electronic devices 231 and 233) to operate as GCs of the second group 610 include identification information (e.g., MAC address, name, and/or various information that may identify the electronic device) of electronic devices to operate as GCs of the second group 610.

In operation 1130, the second electronic device 230 transmits information indicating a GO of the second group 610 and information related to a frequency to be used for communication of the second group to the external electronic devices 231 and 233 corresponding to GCs of the second group 610.

As the second electronic device 220 receives a message (or signal) indicating that generation (or constitution, configuration) of the second group 610 is completed from the first electronic device 210, the second electronic device 220 transmits information indicating a GO (e.g., the first electronic device 210) of the second group 610 to electronic devices (e.g., the external electronic devices 231 and 233) to operate as GCs of the second group 610. Alternatively, even if the second electronic device 220 does not receive a message (or signal) indicating that generation (or constitution, configuration) of the second group 610 is completed from the first electronic device 210, the second electronic device 220 transmits information indicating the GO (e.g., the first electronic device 210) of the second group 610 to electronic devices (e.g., the external electronic devices 231 and 233) to operate as GCs of the second group 610.

The information indicating the GO (e.g., the first electronic device 210) of the second group 610 includes identification information of the GO of the second group 610 and information indicating a frequency band and/or a frequency bandwidth to be used for communication of the second group 610,.

The electronic devices (e.g., the external electronic devices 231 and 233) to operate as GCs of the second group 610 participate in (or join) the second group 610 through the frequency band to be used for communication of the second group 610.

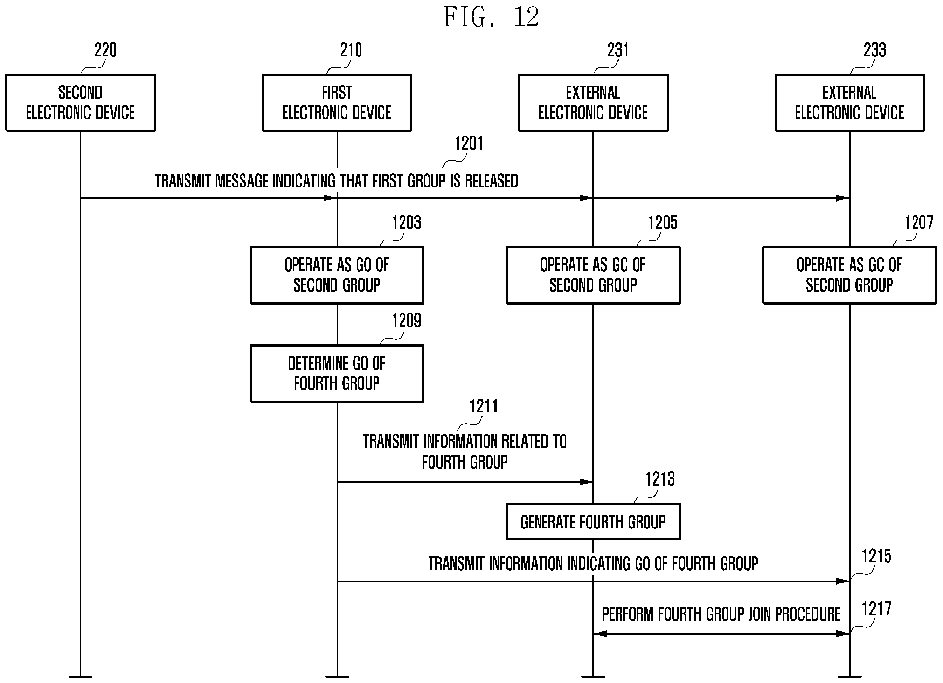

FIG. 12 is a message flow diagram illustrating an example in which a second electronic device performs communication through a second group and generates a fourth group including external electronic devices included in the second group according to release of a first group according to an embodiment.

The first electronic device (e.g., the first electronic device 210 of FIG. 4) included in the first group (e.g., the first group 200 of FIG. 2) generates (or configures) a second group and be in a state in which external electronic devices (e.g., the external electronic devices 231 and 233 of FIG. 2) included in the first group 200 are joined to the second group generated by the first electronic device 210. In FIG. 12, it is assumed that the first electronic device 210 operates as a GO of the second group 610 and that the external electronic devices 231 and 233 operate as GCs of the second group 610.

In operation 1201, the second electronic device 220 transmits a message (e.g., deauthentication) indicating that the first group 200 is released to the first electronic device 210 and the external electronic devices 231 and 233 included in the first group 200 (or operating as a group client (GC) of the first group 200).

In operation 1203, as the first electronic device 210 receives a message (e.g., deauthentication) indicating that the first group (e.g., the first group 200 of FIG. 2) is released, the first electronic device 210 operates as a GO of a pre-generated second group (e.g., the second group 610 of FIG. 6).

In operation 1205, as the external electronic device 231 receives a message (e.g., deauthentication) indicating that the first group (e.g., the first group 200 of FIG. 2) is released, the external electronic device 231 operates as a GC of the pre-generated second group 610.

In operation 1207, as the external electronic device 233 receives a message (e.g., deauthentication) indicating that the first group (e.g., the first group 200 of FIG. 2) is released, the external electronic device 233 operates as a GC of the pre-generated second group 610.

While the first electronic device 210 and the external electronic devices 231 and 233 operate as GCs of the first group 200 and perform communication between electronic devices included in the first group 200, the first electronic device 210 and the external electronic devices 231 and 233 perform communication between electronic devices through the pre-generated second group 610 as release of the first group 200.

As the first group 200 operating as a main group is released, the first electronic device 210 and the external electronic devices 231 and 233 change the pre-generated second group 610 from a sub-group to a main group and perform communication through the second group 610.

While the first electronic device 210 and the external electronic devices 231 and 233 perform communication through the second group 610, the first electronic device 210 and the external electronic devices 231 and 233 perform an operation of generating a fourth group including at least some electronic devices (e.g., the external electronic devices 231 and 233) of the electronic devices included in the second group 610. The fourth group operates as a sub-group while the second group 610 operates as the main group. According to an example, in the case that the second group 610 is released, the fourth group is changed to the main group.

In operation 1209, when generating the fourth group, the first electronic device 210 determines (or selects) an electronic device to operate as a group owner (GO) of the fourth group among electronic devices operating as GCs of the second group 610.

According to an example, when determining (or selecting) an electronic device to operate as a GO of the fourth group, the first electronic device 210 determines (or selects) an electronic device to operate as a GO of the fourth group based on the characteristics of the electronic devices included in the second group 610.

According to an example, the characteristics of the electronic device include performance information of the electronic device. Performance information of the electronic device includes a response speed. The response speed of the electronic device is determined based on the difference between a transmission time of a message (or data or signal) transmitted by the first electronic device 210 and a reception time of a response message (or data or signal) corresponding to a message transmitted by the external electronic devices 231 and 233. The first electronic device 210 determines an electronic device in which a response speed satisfies a designated condition (e.g., a condition in which a response speed is greater than or equal to a designated magnitude or a condition with the fastest response speed) among electronic devices (e.g., the external electronic devices 231 and 233) operating as GCs of the second group 610 as a GO of the fourth group.

According to an example, the characteristics of the electronic device include a value of a GO intent of the electronic device. The first electronic device 210 determines an electronic device in which a GO intent satisfies a designated condition (e.g., a condition with the highest GO intent) among electronic devices (e.g., the external electronic devices 231 and 233) operating as GCs of the second group 610 as a GO of the fourth group.

According to an example, the characteristics of the electronic device include a state in which the electronic device is connected to an external power source (or charger). The first electronic device 210 determines an electronic device connected to an external power source among electronic devices (e.g., the external electronic devices 231 and 233) operating as GCs of the second group 610 as a GO of the fourth group. Among electronic devices (e.g., the external electronic devices 231 and 233) operating as GCs of the second group 610, electronic devices connected to an external power source may be less sensitive to battery consumption and provide a stable communication connection compared to electronic devices not connected to an external power source. Accordingly, the first electronic device 210 determines an electronic device connected to an external power source among electronic devices (e.g., the external electronic devices 231 and 233) operating as GCs of the second group 610 as a GO of the fourth group, thereby implementing a stable connection of the fourth group.

According to an example, the characteristics of the electronic device include a position of the electronic device. The first electronic device 210 determines an electronic device existing at a position that may perform a stable connection of the fourth group among electronic devices (e.g., the external electronic devices 231 and 233) operating as GCs of the second group 610 as a GO of the fourth group. According to an example, the first electronic device 210 identifies positions of electronic devices to be included in the fourth group and determine an electronic device existing at a position closest to a center area of the fourth group as a GO of the fourth group, thereby implementing a stable connection of the fourth group.

According to an example, the characteristics of the electronic device include the degree to which the electronic device moves. The first electronic device 210 determines an electronic device with the least movement among electronic devices (e.g., the external electronic devices 231 and 233) operating as GCs of the second group 610 as a GO of the fourth group, thereby implementing a stable connection of the fourth group.

According to an example, when determining (or selecting) an electronic device to operate as a GO of the fourth group, the first electronic device 210 determines an electronic device designated by the user's selection and/or an application or a service running on the first electronic device 210 as a GO of the fourth group.

According to an example, when determining (or selecting) an electronic device to operate as a GO of the fourth group, the first electronic device 210 determines a GO of the fourth group based on a timepoint of joining (or adding to) the second group. The first electronic device 210 determines an electronic device with the earliest timepoint of joining (or adding to) the second group as a GO of the fourth group or determines an electronic device with the latest timepoint of joining (or adding to) the second group as a GO of the fourth group.

According to an example, the first electronic device 210 acquires (or receives) characteristics of electronic devices (e.g., the external electronic devices 231 and 233) considered to determine a GO of the fourth group in various ways. The first electronic device 210 identifies a frame (e.g., vendor specific information element (VSIE)) exchanged in a process of generating the second group and acquire characteristics of electronic devices (e.g., the external electronic devices 231 and 233) included in the frame.

The timing (or timepoint) at which the first electronic device 210 performs an operation of determining (or selecting) an electronic device to operate as a GO of the fourth group is implemented in various ways.

According to an example, in the case that the number of electronic devices (e.g., the external electronic devices 231 and 233) included in the second group is greater than or equal to (or exceeds) the designated number (e.g., 2 or 3), the first electronic device 210 determines to generate a fourth group and determine an electronic device to operate as a GO of the fourth group.

Hereinafter, for convenience of description, it is assumed that the first electronic device 210 has determined an electronic device to operate as a GO of the fourth group to the external electronic device 231.

In operation 1211, the first electronic device 210 transmits information related to the fourth group to the external electronic device 231.

The first electronic device 210 transmits information related to the fourth group to the GO (e.g., the external electronic device 231) of the fourth group. Information related to the fourth group includes information (or message) indicating that the first electronic device 210 is designated as a GO of the fourth group and/or information indicating an electronic device (e.g., the external electronic device 233) to be included in the fourth group or an electronic device (e.g., the external electronic device 233) to operate as a GC of the fourth group.

Information (or message) indicating that the external electronic device 231 is designated as a GO of the fourth group includes information indicating a frequency band and/or a frequency bandwidth to be used for communication of the fourth group. The information indicating an electronic device (e.g., the external electronic device 233) to operate as a GC of the fourth group may include identification information (e.g., MAC address, name, and/or various information that may identify the electronic device) of an electronic device (e.g., the external electronic device 233) to operate as a GC of the fourth group.

In operation 1213, the external electronic device 231 generates a fourth group based on information related to the fourth group.

In operation 1215, the first electronic device 210 transmits information indicating a GO (e.g., the external electronic device 231) of the fourth group to the external electronic device 233 to operate as a GC of the fourth group.

As the first electronic device 210 receives a message (or signal) indicating that generation (or constitution, configuration) of the fourth group is completed from the external electronic device 231, the first electronic device 210 transmits information indicating the GO (e.g., the external electronic device 231) of the fourth group to an electronic device (e.g., the external electronic device 233) to operate as a GC of the fourth group. Alternatively, even if the first electronic device 210 does not receive a message (or signal) indicating that generation (or constitution or configuration) of the fourth group is completed from the external electronic device 231, the first electronic device 210 transmits information indicating the GO (e.g., the external electronic device 231) of the fourth group to an electronic device (e.g., the external electronic device 233) to operate as a GC of the fourth group.

The information indicating the GO (e.g., the external electronic device 231) of the fourth group includes identification information of the GO of the fourth group and information indicating a frequency band and/or a frequency bandwidth to be used for communication of the fourth group.

In operation 1217, the external electronic devices 231 and 233 perform a fourth group join procedure for joining the external electronic device 233 to the fourth group.

The electronic device (e.g., the external electronic device 233) to operate as a GC of the fourth group participate in (or join) the fourth group through the frequency band to be used for communication of the fourth group.

The electronic device (e.g., the external electronic device 231) operating as a GO of the fourth group transmits a join request message (or invite message) of the fourth group to an electronic device (e.g., the external electronic device 233) to operate as a GC of the fourth group. The external electronic device 233 that has received a join request message (or invite message) of the fourth group participates in (or join) the fourth group based on the join request message (or invite message) of the fourth group.

In order to participate in the fourth group, an electronic device (e.g., the external electronic device 233) to operate as a GC of the fourth group transmits an invite request message to an electronic device (e.g., the external electronic device 231) operating as a GO of the fourth group. The external electronic device 231 that has received the invite request message performs a series of operations of identifying whether the external electronic device 233 that has transmitted the invite request message is included in information indicating an electronic device (e.g., the external electronic device 233) to operate as a GC of the fourth group included in information related to the fourth group and adding the external electronic device 233 that has transmitted the invite request message to the fourth group based on the identification result.

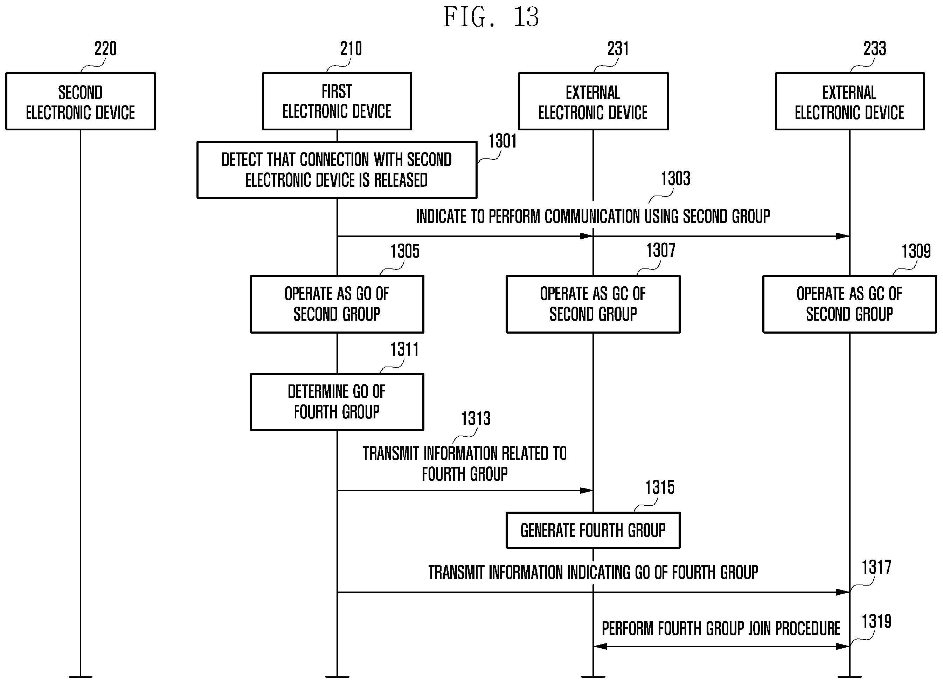

FIG. 13 is a message flow diagram illustrating an example in which a first electronic device performs communication through a second group according to release of a connection with a second electronic device and generates a fourth group including external electronic devices included in the second group according to an embodiment.

In operation 1301, the first electronic device (e.g., the first electronic device 210 of FIG. 5) detects that a connection with the second electronic device (e.g., the second electronic device 220 of FIG. 4) is released.

In the case that the first electronic device 210 does not receive a message (e.g., keep-alive message) exchanged at a designated period in order to identify whether the first group 200 is maintained, the first electronic device 210 identifies that a connection with the second electronic device 220 is released.

In operation 1303, as the first electronic device 210 detects that a connection with the second electronic device 220 is released, the first electronic device 210 transmits a message (or signal) indicating to perform communication using the second group (e.g., the second group 610 of FIG. 6) to the external electronic devices (e.g., the external electronic devices 231 and 233 of FIG. 2).

In operation 1305, as the first electronic device 210 detects that a connection with the second electronic device 220 is released, the first electronic device 210 operates as a GO of the pre-generated second group 610.

In operation 1307, as the external electronic device 231 receives a message (or signal) indicating to perform communication using the second group 610, the external electronic device 231 operates as a GC of the pre-generated second group 610.

In operation 1309, as the external electronic device 233 receives a message (or signal) indicating to perform communication using the second group 610, the external electronic device 233 operates as a GC of the pre-generated second group 610.

While the first electronic device 210 and the external electronic devices 231 and 233 operate as GCs of the first group 200 and perform communication between electronic devices included in the first group 200, as the first electronic device 210 and the external electronic devices 231 and 233 detect that a connection with the second electronic device 220 operating as a GO of the first group 200 is released, the first electronic device 210 and the external electronic devices 231 and 233 perform communication between the electronic devices through the pre-generated second group 610.

While the first electronic device 210 and the external electronic devices 231 and 233 operate as GCs of the first group 200 and perform communication between electronic devices included in the first group 200, as the first electronic device 210 and the external electronic devices 231 and 233 detect that a connection with the second electronic device 220 operating as a GO of the first group 200 is released, the first electronic device 210 and the external electronic devices 231 and 233 change the pre-generated second group 610 from a sub-group to a main group and perform communication between electronic devices through the second group 610.

While the first electronic device 210 and the external electronic devices 231 and 233 perform communication through the second group 610, the first electronic device 210 and the external electronic devices 231 and 233 perform an operation of generating a fourth group including at least some electronic devices (e.g., the external electronic devices 231 and 233) of electronic devices included in the second group 610. The fourth group operates as a sub-group while the second group 610 operates as a main group. According to an example, in the case that the second group 610 is released, the fourth group be changed to the main group.

When generating the fourth group, the first electronic device 210 determines (or selects) an electronic device to operate as a group owner (GO) of the second group 610 among electronic devices operating as GCs of the second group 610.

According to an example, in operation 1311, when determining (or selecting) an electronic device to operate as a GO of the fourth group, the first electronic device 210 determines (or selects) an electronic device to operate as a GO of the fourth group based on the characteristics of electronic devices included in the second group 610.

According to an example, the characteristics of the electronic device include a performance information of the electronic device. Performance information of the electronic device include a response speed. The response speed of the electronic device is determined based on the difference between a transmission time of a message (or data, signal) transmitted by the first electronic device 210 and a reception time of a response message (or data, signal) corresponding to a message transmitted by the external electronic devices 231 and 233. The first electronic device 210 determines an electronic device in which a response speed satisfies a designated condition (e.g., a condition that a response speed is greater than or equal to a designated magnitude or a condition with the fastest response speed) among electronic devices (e.g., the first electronic device 210, the external electronic devices 231 and 233) operating as GCs of the second group 610 as a GO of the fourth group.

According to an example, the characteristics of the electronic device include a value of a GO intent of the electronic device. The first electronic device 210 determines an electronic device in which a GO intent satisfies a designated condition (e.g., a condition with the highest GO intent) among electronic devices (e.g., the external electronic devices 231 and 233) operating as GCs of the second group 610 as a GO of the fourth group.

According to an example, the characteristics of the electronic device include a state in which the electronic device is connected to an external power source (or charger). The first electronic device 210 determines an electronic device connected to an external power source among electronic devices (e.g., the external electronic devices 231 and 233) operating as GCs of the second group 610 as a GO of the fourth group. Among electronic devices (e.g., the external electronic devices 231 and 233) operating as GCs of the second group 610, electronic devices connected to an external power source are less sensitive to battery consumption and provide a stable communication connection compared to electronic devices not connected to an external power source. Accordingly, the first electronic device 210 determines an electronic device connected to an external power source among electronic devices (e.g., the external electronic devices 231 and 233) operating as GCs of the second group 610 as a GO of the fourth group, thereby implementing a stable connection of the fourth group.

According to an example, the characteristics of the electronic device include a position of the electronic device. The first electronic device 210 determines an electronic device existing at a position that may perform a stable connection of the fourth group among electronic devices (e.g., the external electronic devices 231 and 233) operating as GCs of the second group 610 as a GO of the fourth group. According to an example, the first electronic device 210 identifies positions of electronic devices to be included in the fourth group and determines an electronic device existing at a position closest to a center area of the fourth group as a GO of the fourth group, thereby implementing a stable connection of the fourth group.

According to an example, the characteristics of the electronic device include the degree to which the electronic device moves. The first electronic device 210 determines an electronic device with the least movement among electronic devices (e.g., the external electronic devices 231 and 233) operating as GCs of the second group 610 as a GO of the fourth group, thereby implementing a stable connection of the fourth group.

According to an example, when determining (or selecting) an electronic device to operate as a GO of the fourth group, the first electronic device 210 determines an electronic device designated by the user's selection and/or an application or a service running on the first electronic device 210 as a GO of the fourth group.

According to an example, when determining (or selecting) an electronic device to operate as a GO of the fourth group, the first electronic device 210 determines a GO of the fourth group based on a timepoint of joining (or adding to) the second group. The first electronic device 210 determines an electronic device with the earliest timepoint of joining (or adding to) the second group as a GO of the fourth group or determines an electronic device with the latest timepoint of joining (or adding to) the second group as a GO of the fourth group.

The timing (or timepoint) at which the first electronic device 210 performs an operation of determining (or selecting) an electronic device to operate as a GO of the fourth group may be implemented in various ways.

According to an example, in the case that the number of electronic devices (e.g., the external electronic devices 231 and 233) included in the second group is equal to or greater than (or exceeds) the designated number (e.g., 2 or 3), the first electronic device 210 determines to generate a fourth group and determines an electronic device to operate as a GO of the fourth group.

Hereinafter, for convenience of description, it is assumed that the first electronic device 210 has determined an electronic device to operate as a GO of the fourth group as the external electronic device 231.

In operation 1313, the first electronic device 210 transmits information related to the fourth group to the external electronic device 231.

The first electronic device 210 transmits information related to the fourth group to a GO (e.g., the external electronic device 231) of the fourth group. Information related to the fourth group may include information (or message) indicating that the first electronic device 210 is designated as a GO of the fourth group and/or information indicating an electronic device (e.g., the external electronic device 233) to be included in the fourth group or an electronic device (e.g., the external electronic device 233) to operate as a GC of the fourth group.

Information (or message) indicating that the external electronic device 231 is designated as a GO of the fourth group includes information indicating a frequency band and/or a frequency bandwidth to be used for communication of the fourth group. The information indicating an electronic device (e.g., the external electronic device 233) to operate as a GC of the fourth group includes identification information (e.g., an MAC address, name, and/or various information that may identify an electronic device) of an electronic device (e.g., the external electronic device 233) to operate as a GC of the fourth group.

In operation 1315, the external electronic device 231 generates a fourth group based on information related to the fourth group.

In operation 1317, the first electronic device 210 transmits information indicating a GO (e.g., the external electronic device 231) of the fourth group to the external electronic device 233 to operate as a GC of the fourth group.

As the first electronic device 210 receives a message (or signal) indicating that generation (or constitution or configuration) of the fourth group is completed from the external electronic device 231, the first electronic device 210 transmits information indicating a GO (e.g., the external electronic device 231) of the fourth group to an electronic device (e.g., the external electronic device 233) to operate as a GC of the fourth group. Alternatively, even if the first electronic device 210 does not receive a message (or signal) indicating that generation (or constitution or configuration) of the fourth group is completed from the external electronic device 231, the first electronic device 210 transmits information indicating a GO (e.g., the external electronic device 231) of the fourth group to an electronic device (e.g., the external electronic device 233) to operate as a GC of the fourth group.

The information indicating a GO (e.g., the external electronic device 231) of the fourth group includes identification information of a GO of the fourth group and information indicating a frequency band and/or a frequency bandwidth to be used for communication of the fourth group.

In operation 1319, the external electronic devices 231 and 233 perform a fourth group join procedure for joining the external electronic device 233 to the fourth group.

The electronic device (e.g., the external electronic device 233) to operate as a GC of the fourth group participates in (or joins) the fourth group through a frequency band to be used for communication of the fourth group.

The electronic device (e.g., the external electronic device 231) operating as a GO of the fourth group transmits a join request message (or invite message) of the fourth group to the electronic device (e.g., the external electronic device 233) to operate as a GC of the fourth group. The external electronic device 233 that has received a join request message (or invite message) of the fourth group participates in (or joins) the fourth group based on the join request message (or invite message) of the fourth group.

In order to participate in the fourth group, the electronic device (e.g., the external electronic device 233) to operate as a GC of the fourth group transmits an invite request message to an electronic device (e.g., the external electronic device 231) operating as a GO of the fourth group. The external electronic device 231 that has received the invite request message performs a series of operations of identifying whether the external electronic device 233 that has transmitted the invite request message is included information indicating an electronic device (e.g., the external electronic device 233) to operate as a GC of the fourth group included in information related to the fourth group and adding the external electronic device 233 that has transmitted the invite request message to the fourth group based on the identification result.

According to an example, the first electronic device (e.g., the first electronic device 210 of FIG. 5) includes a communication circuit (e.g., the communication circuit 510 of FIG. 5) for supporting short-range wireless communication. The first electronic device 210 includes a processor (e.g., the processor 520 of FIG. 5) operatively connected to the communication circuit. The first electronic device 210 includes a memory (e.g., the memory 130 of FIG. 1). When executed by the processor, the memory stores an instruction that causes the first electronic device to receive information related to a second group 610 including information related to a frequency band to be used for communication of the second group (e.g., the second group 610 of FIG. 6) including the first electronic device and external electronic devices (e.g., the external electronic devices 231 and 233) included in the first group and information indicating the external electronic devices 231 and 233 to operate as a group client (GC) to be included in the second group 610 from a second electronic device (e.g., the second electronic device 220 of FIG. 4) operating as a group owner (GO) of the first group 200 in which the first electronic device 210 and the external electronic devices (e.g., the external electronic devices 231 and 233 of FIG. 2) operate as a group client (GC). The memory 130 stores an instruction that causes the first electronic device to configure the second group 610 including the first electronic device and the external electronic devices 231 and 233 and excluding the second electronic device 220 based on information related to the second group 610. In the case that the first group 200 is released, the memory 130 stores an instruction that causes the first electronic device to communicate with the external electronic devices 231 and 233 included in the second group 610 through a frequency band used by the second group 610 as a group owner (GO) of the second group 610.

In the first electronic device 210 according to an example, in the case that the first group 200 is maintained, the memory 130 is configured to further store an instruction that causes the first electronic device to communicate with the first electronic device 210 and/or the external electronic devices 231 and 233 through a frequency band used by the first group 200.

In the first electronic device 210 according to an example, in the case that the first group 200 is maintained, the memory 130 may be configured to further store an instruction that causes the processor to refrain from communicating with the external electronic devices 231 and 233 included in the second group 610 through a frequency band used by the second group 610.

In the first electronic device 210 according to an example, the memory 130 is configured to further store an instruction that causes the first electronic device to add the external electronic devices 231 and 233 that has transmitted the join request message to the second group 610 according to reception of a join request message of the second group 610 from the external electronic devices 231 and 233 included in information indicating the GC.

In the first electronic device 210 according to an example, the memory 130 is configured to further store an instruction that causes the first electronic device to transmit an invite message for joining the second group 610 to the external electronic devices 231 and 233 included in information indicating the GC.

In the first electronic device 210 according to an example, as new external electronic devices 231 and 233 join the first group 200, the memory 130 further stores an instruction that causes the first electronic device to receive information indicating the new external electronic devices 231 and 233 from the second electronic device 220. The memory 130 further stores an instruction that causes the first electronic device to perform a procedure of joining the new external electronic devices 231 and 233 to the second group 610.

In the first electronic device 210 according to an example, the frequency band to be used for communication of the second group 610 includes a frequency band lower than that to be used for communication of the first group 200.

In the first electronic device 210 according to an example, the memory 130 is configured to further store an instruction that causes the first electronic device to change the frequency band to be used for communication of the second group 610 to the same frequency band as that to be used for communication of the first group 200 according to release of the first group 200.

In the first electronic device 210 according to an example, the information indicating the external electronic devices 231 and 233 included in information related to the second group 610 may include identification information of the external electronic devices 231 and 233 and media access control (MAC) addresses of the external electronic devices 231 and 233.

A method of operating the first electronic device 210 according to an example includes receiving information related to a second group 610 including information related to a frequency to be used for communication of the second group 610 including the first electronic device 210 and the external electronic devices 231 and 233 and information indicating the external electronic devices 231 and 233 to operate as a group client (GC) to be included in the second group 610 from the second electronic device 220 operating as a group owner (GO) of the first group 200 in which the first electronic device 210 and the external electronic devices 231 and 233 operate as a group client (GC). The method of operation the first electronic device 210 includes configuring the second group 610 including the first electronic device 210 and the external electronic devices 231 and 233 and excluding the second electronic device 220 based on information related to the second group 610. The method of operating the first electronic device 210 includes communicating with the external electronic devices 231 and 233 included in the second group 610 through a frequency band used by the second group 610 as a connection with the second electronic device 220 is released.

A method of operating the first electronic device 210 according to an example further includes communicating, in the case that the first group 200 is maintained, with the first electronic device 210 and/or the external electronic devices 231 and 233 through a frequency band used by the first group 200.

A method of operating the first electronic device 210 according to an example further includes suppressing, in the case that the first group 200 is maintained, from communicating with the external electronic devices 231 and 233 included in the second group 610 through a frequency band used by the second group 610.

In the method of operating the first electronic device 210 according to an example, configuring the second group 610 includes adding the external electronic devices 231 and 233 that has transmitted the join request message to the second group 610 according to reception of a join request message of the second group 610 from the second electronic device 231 and 233 included in information indicating the GC.

In the method of operating the first electronic device 210 according to an example, configuring the second group 610 includes transmitting an invite message for joining the second group 610 to the external electronic devices 231 and 233 included in information indicating the GC.

A method of operating the first electronic device 210 according to an example further includes receiving information indicating new external electronic devices 231 and 233 from the second electronic device 220 as the new external electronic devices 231 and 233 join the first group 200. The method of operating the first electronic device 210 further includes performing a procedure of joining the new external electronic devices 231 and 233 to the second group 610.

In the method of operating the first electronic device 210 according to an example, the frequency band to be used for communication of the second group 610 includes a frequency band equal to or lower than a frequency band to be used for communication of the first group 200.

A method of operating the first electronic device 210 according to an example further includes changing the frequency band to be used for communication of the second group 610 to the same frequency band as that to be used for communication of the first group 200 according to release of the first group 200.

In the method of operating the first electronic device 210 according to an example, information indicating the external electronic devices 231 and 233 included in information related to the second group 610 includes identification information of the external electronic devices 231 and 233 and media access control (MAC) addresses of the external electronic devices 231 and 233.

The second electronic device 220 according to an example includes a communication circuit (e.g., the communication circuit 410 of FIG. 4) for supporting short-range wireless communication. The second electronic device 220 includes a processor (e.g., the processor 420 of FIG. 4) operatively connected to the communication circuit. The second electronic device 220 includes a memory 130. When executed by the processor 420, while the second electronic device 220 operates as a group owner (GO) of a first group 200 including the second electronic device 220 and at least one external electronic device 231 and 233, the memory 130 stores an instruction that causes the second electronic device to determine one external electronic device 231 or 233 of the at least one external electronic device 231 and 233 as a group owner (GO) of the second group 610. The memory 130 stores an instruction that controls the communication circuit 410 to transmit information related to the second group 610 including a frequency band to be used for communication of the second group 610 and information indicating the at least one external electronic device 231 and 233 to operate as a group client (GC) to be included in the second group 610 among the at least one external electronic device 231 and 233 to the first electronic device 210 determined as a GO of the second group 610. The memory 130 stores an instruction that causes the processor to control the communication circuit 410 to transmit information indicating a GO of the second group 610 and information including a frequency band to be used for communication of the second group 610 to the external electronic devices 231 and 233 for performing a group client (GC) to be included in the second group 610 among the at least one external electronic device 231 and 233.

In the second electronic device 220 according to an example, the first group 200 includes the first electronic device 210, which is a GO of the second group 610 and a GC included in the second group 610.

In the second electronic device 220 according to an example, the memory 130 is configured to further store an instruction that causes the second electronic device to determine a group owner (GO) of the second group 610 based on a GO intent of each of the at least one external electronic device 231 and 233.

In the second electronic device 220 according to an example, the memory 130 is configured to further store an instruction that causes the second electronic device to determine a GO of the second group 610 based on performance information of each of the at least one external electronic device 231 and 233.

In the second electronic device 220 according to an example, the memory 130 is configured to further store an instruction that causes the second electronic device to change another external electronic device 231 or 233 among the at least one external electronic device 231 and 233 to a GO of the second group 610 as detecting that a connection with the first electronic device 210 determined to a GO of the second group 610 through short-range wireless communication is released.

In the second electronic device 220 according to an example, as new external electronic devices 231 and 233 join the first group 200, the memory 130 is configured to further store an instruction that causes the second electronic device to transmit information indicating the new external electronic devices 231 and 233 to the first electronic device 210, and transmit information indicating a GO of the second group 610 and information including a frequency band to be used for communication of the second group 610 to the new external electronic devices 231 and 233.

In the second electronic device 220 according to an example, the frequency band to be used for communication of the second group 610 includes a frequency band equal to or lower than a frequency band to be used for communication of the first group 200.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor(e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A first electronic device (210), comprising:
communication circuitry (510) configured to support short-range wireless communication;
at least one processor (520) operatively connected to the communication circuit; and
memory storing instructions,
wherein the instructions, when executed by the at least one processor, cause the first electronic device to:
receive, from a second electronic device (220) operating as a group owner of a first group (200) in which the first electronic device (210) and at least one external electronic device (231/233) operate as a group client, GC, information related to a second group including information related to a frequency band to be used for communication of the second group including the first electronic device and the at least one external electronic device included in the first group and information indicating the at least one external electronic device (231/233) to operate as a GC to be included in the second group,
configure, while the first electronic device operates as a GC of the first group, the second group including the first electronic device and the at least one external electronic device and excluding the second electronic device (220) based on the information related to the second group,
communicate, as the group client of the first group, with the at least one external electronic device and the second electronic device after the configuration of the second group is completed, wherein the second group is in an inactivated state; and
based on a determination that the first group is released, activate the second group and communicate, as a group owner of the second group, with the at least one external electronic device (231/233) included in the second group through a frequency band used by the second group.

2. The first electronic device of claim 1, wherein the instructions, when executed by the at least one processor, cause the first electronic device to communicate with the at least one external electronic device through the frequency band used by the first group in the case that the first group is maintained.

3. The first electronic device of claim 1 or claim 2, wherein the instructions, when executed by the at least one processor, cause the first electronic device to refrain from communicating with the at least one external electronic device included in the second group through the frequency band to be used for communication by the second group in the case that the first group is maintained.

4. The first electronic device of any preceding claim, wherein the instructions, when executed by the at least one processor, cause the first electronic device to add an external electronic device that has transmitted a join request message to the second group according to reception of the join request message of the second group from an external electronic device included in information indicating the group client, GC.

5. The first electronic device of any preceding claim, wherein the instructions, when executed by the at least one processor, cause the first electronic device to transmit an invite message for joining the second group to an external electronic device included in information indicating the GC.

6. The first electronic device of any preceding claim, wherein the instructions, when executed by the at least one processor, cause the first electronic device to:
receive, from the second electronic device, information indicating a new external electronic device as the new external electronic device joins the first group, and
perform a procedure of joining the new external electronic device to the second group.

7. The first electronic device of any preceding claim, wherein the frequency band to be used for communication of the second group comprises a frequency band lower than that to be used for communication of the first group.

8. The first electronic device of any preceding claim, wherein the instructions, when executed by the at least one processor, cause the first electronic device to change the frequency band to be used for communication of the second group to the same frequency band as that to be used for communication of the first group according to release of the first group.

9. The first electronic device of any preceding claim, wherein the information indicating the external electronic device included in the information related to the second group comprises identification information of the external electronic device and a media access control, MAC, address of the external electronic device.

10. A method of operating a first electronic device (220), the method comprising:
receiving, from a second electronic device (210) operating as a group owner, GO, of a first group in which the first electronic device and at least one external electronic device (231/233) operate as a group client, GC, by the first electronic device and the at least one external electronic device (231/233), information related to the second group including information related to a frequency band to be used for communication of the second group (610) including the first electronic device and the at least one external electronic device included in the first group and information indicating the external electronic device to operate as a GC to be included in the second group;
configuring, while the first electronic device (220) operates as a GC of the first group, the second group including the first electronic device and the at least one external electronic device and excluding the second electronic device (220) based on the information related to the second group;
communicating, as the group client of the first group, with the at least one external electronic device and the second electronic device after the configuration of the second group is completed, wherein the second group is in inactivated state; and
based on determination that the first group is released, activating the second group and communicating, as a group owner of the second group, with the at least one external electronic device included in the second group through a frequency band used by the second group.

11. The method of claim 10, further comprising communicating, in the case that the first group is maintained, with the first electronic device and/or the at least one external electronic device through a frequency band used by the first group.

12. The method of claim 10 or claim 11, further comprising refraining, in the case that the first group is maintained, from communicating with the external electronic device included in the second group through the frequency band to be used for communication by the second group.

13. The method of any one of claims 10 to 12, wherein configuring the second group comprises adding the external electronic device that has transmitted a join request message to the second group as the first group according to reception of the join request message of the second group from the external electronic device included in information indicating the GC.

14. The method of any one of claims 10 to 13, wherein configuring the second group comprises transmitting an invite message for joining the second group to the external electronic device included in information indicating the GC.

15. The method of any one of claims 10 to 14, further comprising:
receiving, as a new external electronic device joins the first group, information indicating the new external electronic device from the second electronic device; and
performing a procedure of joining the new external electronic device to the second group.

## Patentansprüche

1. Erste elektronische Vorrichtung (210), umfassend:
eine Kommunikationsschaltung (510), die dazu konfiguriert ist, eine drahtlose Nahbereichskommunikation zu unterstützen;
mindestens einen Prozessor (520), der mit der Kommunikationsschaltung wirkverbunden ist; und
einen Speicher, der Anweisungen speichert,
wobei die Anweisungen, wenn sie durch den mindestens einen Prozessor ausgeführt werden, die erste elektronische Vorrichtung zu Folgendem veranlassen:
Empfangen, von einer zweiten elektronischen Vorrichtung (220), die als Gruppenbesitzer einer ersten Gruppe (200) betrieben wird, in der die erste elektronische Vorrichtung (210) und mindestens eine externe elektronische Vorrichtung (231/233) als Gruppenclient, GC, betrieben werden, von Informationen in Bezug auf eine zweite Gruppe, die Informationen in Bezug auf ein Frequenzband, das für die Kommunikation der zweiten Gruppe zu verwenden ist, die die erste elektronische Vorrichtung und die mindestens eine externe elektronische Vorrichtung, die in der ersten Gruppe enthalten ist, enthält, und Informationen, die angeben, dass die mindestens eine externe elektronische Vorrichtung (231/233) als ein GC zu betreiben ist, der in die zweite Gruppe einzuschließen ist, enthalten,
Konfigurieren, während die erste elektronische Vorrichtung als ein GC der ersten Gruppe betrieben wird, der zweiten Gruppe, die die erste elektronische Vorrichtung und die mindestens eine externe elektronische Vorrichtung enthält und die zweite elektronische Vorrichtung (220) ausschließt, basierend auf den Informationen in Bezug auf die zweite Gruppe,
Kommunizieren, als der Gruppenclient der ersten Gruppe, mit der mindestens einen externen elektronischen Vorrichtung und der zweiten elektronischen Vorrichtung, nachdem die Konfiguration der zweiten Gruppe abgeschlossen ist, wobei sich die zweite Gruppe in einem inaktivierten Zustand befindet; und
basierend auf einer Bestimmung, dass die erste Gruppe freigegeben ist, Aktivieren der zweiten Gruppe und Kommunizieren, als ein Gruppenbesitzer der zweiten Gruppe, mit der mindestens einen externen elektronischen Vorrichtung (231/233), die in der zweiten Gruppe enthalten ist, über ein Frequenzband, das durch die zweite Gruppe verwendet wird.

2. Erste elektronische Vorrichtung nach Anspruch 1, wobei die Anweisungen, wenn sie durch den mindestens einen Prozessor ausgeführt werden, die erste elektronische Vorrichtung dazu veranlassen, mit der mindestens einen externen elektronischen Vorrichtung über das Frequenzband, das durch die erste Gruppe verwendet wird, zu kommunizieren, falls die erste Gruppe aufrechterhalten wird.

3. Erste elektronische Vorrichtung nach Anspruch 1 oder Anspruch 2, wobei die Anweisungen, wenn sie durch den mindestens einen Prozessor ausgeführt werden, die erste elektronische Vorrichtung dazu veranlassen, es zu unterlassen, mit der mindestens einen externen elektronischen Vorrichtung, die in der zweiten Gruppe enthalten ist, über das Frequenzband zu kommunizieren, das für die Kommunikation durch die zweite Gruppe zu verwenden ist, falls die erste Gruppe aufrechterhalten wird.

4. Erste elektronische Vorrichtung nach einem vorhergehenden Anspruch, wobei die Anweisungen, wenn sie durch den mindestens einen Prozessor ausgeführt werden, die erste elektronische Vorrichtung dazu veranlassen, eine externe elektronische Vorrichtung, die eine Beitrittsanforderungsnachricht übertragen hat, gemäß dem Empfang der Beitrittsanforderungsnachricht der zweiten Gruppe von einer externen elektronischen Vorrichtung, die in Informationen enthalten ist, die den Gruppenclient, GC, angeben, zu der zweiten Gruppe hinzuzufügen.

5. Erste elektronische Vorrichtung nach einem vorhergehenden Anspruch, wobei die Anweisungen, wenn sie durch den mindestens einen Prozessor ausgeführt werden, die erste elektronische Vorrichtung dazu veranlassen, eine Einladungsnachricht zum Beitreten zu der zweiten Gruppe an eine externe elektronische Vorrichtung, die in Informationen, die den GC angeben, enthalten ist, zu übertragen.

6. Erste elektronische Vorrichtung nach einem vorhergehenden Anspruch, wobei die Anweisungen, wenn sie durch den mindestens einen Prozessor ausgeführt werden, die erste elektronische Vorrichtung zu Folgendem veranlassen:
Empfangen, von der zweiten elektronischen Vorrichtung, von Informationen, die eine neue externe elektronische Vorrichtung angeben, wenn die neue externe elektronische Vorrichtung der ersten Gruppe beitritt, und
Durchführen eines Vorgangs eines Beitretens der neuen externen elektronischen Vorrichtung zu der zweiten Gruppe.

7. Erste elektronische Vorrichtung nach einem vorhergehenden Anspruch, wobei das Frequenzband, das für die Kommunikation der zweiten Gruppe zu verwenden ist, ein Frequenzband umfasst, das niedriger ist als dasjenige, das für die Kommunikation der ersten Gruppe zu verwenden ist.

8. Erste elektronische Vorrichtung nach einem vorhergehenden Anspruch, wobei die Anweisungen, wenn sie durch den mindestens einen Prozessor ausgeführt werden, die erste elektronische Vorrichtung dazu veranlassen, das Frequenzband, das für die Kommunikation der zweiten Gruppe zu verwenden ist, in das gleiche Frequenzband zu ändern als dasjenige, das für die Kommunikation der ersten Gruppe zu verwenden ist, gemäß der Freigabe der ersten Gruppe.

9. Erste elektronische Vorrichtung nach einem vorhergehenden Anspruch, wobei die Informationen, die die externe elektronische Vorrichtung angeben, die in den Informationen in Bezug auf die zweite Gruppe enthalten sind, Identifikationsinformationen der externen elektronischen Vorrichtung und eine Medienzugriffssteuerungs-Adresse, MAC-Adresse, der externen elektronischen Vorrichtung umfassen.

10. Verfahren zum Betreiben einer ersten elektronischen Vorrichtung (220), wobei das Verfahren Folgendes umfasst:
Empfangen, von einer zweiten elektronischen Vorrichtung (210), die als Gruppenbesitzer, GO, einer ersten Gruppe betrieben wird, in der die erste elektronische Vorrichtung und mindestens eine externe elektronische Vorrichtung (231/233) als Gruppenclient, GC, betrieben werden, durch die erste elektronische Vorrichtung und die mindestens eine externe elektronische Vorrichtung (231/233), von Informationen in Bezug auf die zweite Gruppe, die Informationen in Bezug auf ein Frequenzband, das für die Kommunikation der zweiten Gruppe (610) zu verwenden ist, die die erste elektronische Vorrichtung und die mindestens eine externe elektronische Vorrichtung, die in der ersten Gruppe enthalten ist, enthält, und Informationen, die angeben, dass die externe elektronische Vorrichtung als ein GC zu betreiben ist, der in die zweite Gruppe einzuschließen ist, enthalten;
Konfigurieren, während die erste elektronische Vorrichtung (220) als ein GC der ersten Gruppe betrieben wird, der zweiten Gruppe, die die erste elektronische Vorrichtung und die mindestens eine externe elektronische Vorrichtung enthält und die zweite elektronische Vorrichtung (220) ausschließt, basierend auf den Informationen in Bezug auf die zweite Gruppe;
Kommunizieren, als der Gruppenclient der ersten Gruppe, mit der mindestens einen externen elektronischen Vorrichtung und der zweiten elektronischen Vorrichtung, nachdem die Konfiguration der zweiten Gruppe abgeschlossen ist, wobei sich die zweite Gruppe im inaktivierten Zustand befindet; und
basierend auf der Bestimmung, dass die erste Gruppe freigegeben ist, Aktivieren der zweiten Gruppe und Kommunizieren, als ein Gruppenbesitzer der zweiten Gruppe, mit der mindestens einen externen elektronischen Vorrichtung, die in der zweiten Gruppe enthalten ist, über ein Frequenzband, das durch die zweite Gruppe verwendet wird.

11. Verfahren nach Anspruch 10, ferner umfassend Kommunizieren, falls die erste Gruppe aufrechterhalten wird, mit der ersten elektronischen Vorrichtung und/oder der mindestens einen externen elektronischen Vorrichtung über ein Frequenzband, das durch die erste Gruppe verwendet wird.

12. Verfahren nach Anspruch 10 oder Anspruch 11, ferner umfassend Unterlassen, falls die erste Gruppe aufrechterhalten wird, eines Kommunizierens mit der externen elektronischen Vorrichtung, die in der zweiten Gruppe enthalten ist, über das Frequenzband, das für die Kommunikation durch die zweite Gruppe zu verwenden ist.

13. Verfahren nach einem der Ansprüche 10 bis 12, wobei das Konfigurieren der zweiten Gruppe Hinzufügen der externen elektronischen Vorrichtung, die eine Beitrittsanforderungsnachricht übertragen hat, als die erste Gruppe gemäß dem Empfang der Beitrittsanforderungsnachricht der zweiten Gruppe von der externen elektronischen Vorrichtung, die in Informationen enthalten ist, die den GC angeben, zu der zweiten Gruppe umfasst.

14. Verfahren nach einem der Ansprüche 10 bis 13, wobei das Konfigurieren der zweiten Gruppe Übertragen einer Einladungsnachricht zum Beitreten zu der zweiten Gruppe an die externe elektronische Vorrichtung, die in Informationen enthalten ist, die den GC angeben, umfasst.

15. Verfahren nach einem der Ansprüche 10 bis 14, ferner umfassend:
Empfangen, von der zweiten elektronischen Vorrichtung, von Informationen, die die neue externe elektronische Vorrichtung angeben, wenn eine neue externe elektronische Vorrichtung der ersten Gruppe beitritt; und
Durchführen eines Vorgangs eines Beitretens der neuen externen elektronischen Vorrichtung zu der zweiten Gruppe.

## Revendications

1. Premier dispositif électronique (210), comprenant :
des circuits de communication (510) configurés pour prendre en charge une communication sans fil à courte portée ;
au moins un processeur (520) connecté fonctionnellement au circuit de communication ; et
une mémoire stockant des instructions,
dans lequel les instructions, lorsqu'elles sont exécutées par l'au moins un processeur, amènent le premier dispositif électronique à :
recevoir, à partir d'un second dispositif électronique (220) fonctionnant en tant que propriétaire de groupe d'un premier groupe (200) où le premier dispositif électronique (210) et au moins un dispositif électronique externe (231/233) fonctionnent en tant que client de groupe, GC, des informations relatives à un second groupe comprenant des informations relatives à une bande de fréquences à utiliser pour la communication du second groupe comprenant le premier dispositif électronique et l'au moins un dispositif électronique externe compris dans le premier groupe et des informations indiquant à l'au moins un dispositif électronique externe (231/233) de fonctionner en tant que GC à comprendre dans le second groupe,
configurer, tandis que le premier dispositif électronique fonctionne comme un GC du premier groupe, le second groupe comprenant le premier dispositif électronique et l'au moins un dispositif électronique externe et excluant le second dispositif électronique (220) sur la base des informations relatives au second groupe,
communiquer, en tant que client de groupe du premier groupe, avec l'au moins un dispositif électronique externe et le second dispositif électronique une fois la configuration du second groupe terminée, dans lequel le second groupe est dans un état non activé ; et
sur la base d'une détermination du fait que le premier groupe est libéré, activer le second groupe et communiquer, en tant que propriétaire de groupe du second groupe, avec l'au moins un dispositif électronique externe (231/233) compris dans le second groupe au travers d'une bande de fréquences utilisée par le second groupe.

2. Premier dispositif électronique de la revendication 1, dans lequel les instructions, lorsqu'elles sont exécutées par l'au moins un processeur, amènent le premier dispositif électronique à communiquer avec l'au moins un dispositif électronique externe à travers la bande de fréquences utilisée par le premier groupe dans le cas où le premier groupe est maintenu.

3. Premier dispositif électronique de la revendication 1 ou de la revendication 2, dans lequel les instructions, lorsqu'elles sont exécutées par l'au moins un processeur, amènent le premier dispositif électronique à s'abstenir de communiquer avec l'au moins un dispositif électronique externe compris dans le second groupe au travers de la bande de fréquences à utiliser pour la communication par le second groupe dans le cas où le premier groupe est maintenu.

4. Premier dispositif électronique d'une quelconque revendication précédente, dans lequel instructions, lorsqu'elles sont exécutées par ledit au moins un processeur, amènent le premier dispositif électronique à ajouter un dispositif électronique externe qui a transmis un message de demande de jonction au second groupe selon la réception du message de demande de jonction du second groupe à partir d'un dispositif électronique externe compris dans des informations indiquant le client de groupe, GC.

5. Premier dispositif électronique d'une quelconque revendication précédente, dans lequel les instructions, lorsqu'elles sont exécutées par l'au moins un processeur, amènent le premier dispositif électronique à transmettre un message d'invitation pour rejoindre le second groupe à un dispositif électronique externe compris dans les informations indiquant le GC.

6. Premier dispositif électronique d'une quelconque revendication précédente, dans lequel les instructions, lorsqu'elles sont exécutées par l'au moins un processeur, amènent le premier dispositif électronique à :
recevoir, à partir du second dispositif électronique, des informations indiquant un nouveau dispositif électronique externe lorsque le nouveau dispositif électronique externe rejoint le premier groupe, et
réaliser une procédure de jonction du nouveau dispositif électronique externe au second groupe.

7. Premier dispositif électronique d'une quelconque revendication précédente, dans lequel la bande de fréquences à utiliser pour la communication du second groupe comprend une bande de fréquences inférieure à celle à utiliser pour la communication du premier groupe.

8. Premier dispositif électronique d'une quelconque revendication précédente, dans lequel les instructions, lorsqu'elles sont exécutées par l'au moins un processeur, amènent le premier dispositif électronique à modifier la bande de fréquences à utiliser pour la communication du second groupe à la même bande de fréquences que celle à utiliser pour la communication du premier groupe selon la libération du premier groupe.

9. Premier dispositif électronique d'une quelconque revendication précédente, dans lequel les informations indiquant le dispositif électronique externe comprises dans les informations relatives au second groupe comprennent
des informations d'identification du dispositif électronique externe et une adresse de commande d'accès au support, MAC, du
dispositif électronique externe.

10. Procédé de fonctionnement d'un premier dispositif électronique (220), le procédé comprenant :
la réception, à partir d'un second dispositif électronique (210) fonctionnant en tant que propriétaire de groupe, GO, d'un premier groupe où le premier dispositif électronique et au moins un dispositif électronique externe (231/233) fonctionnent en tant que client de groupe, GC, par le premier dispositif électronique et l'au moins un dispositif électronique externe (231/233), d'informations relatives au second groupe comprenant des informations relatives à une bande de fréquences à utiliser pour la communication du second groupe (610) comprenant le premier dispositif électronique et l'au moins un dispositif électronique externe compris dans le premier groupe et d'informations indiquant au dispositif électronique externe de fonctionner en tant que GC à comprendre dans le second groupe ;
la configuration, tandis que le premier dispositif électronique (220) fonctionne comme un GC du premier groupe, du second groupe comprenant le premier dispositif électronique et l'au moins un dispositif électronique externe et excluant le second dispositif électronique (220) sur la base des informations relatives au second groupe ;
la communication, en tant que client de groupe du premier groupe, avec l'au moins un dispositif électronique externe et le second dispositif électronique une fois la configuration du second groupe terminée, dans lequel le second groupe est à l'état non activé ; et
sur la base de la détermination du fait que le premier groupe est libéré, l'activation du second groupe et la communication, en tant que propriétaire de groupe du second groupe, avec l'au moins un dispositif électronique externe compris dans le second groupe au travers d'une bande de fréquences utilisée par le second groupe.

11. Procédé de la revendication 10, comprenant en outre la communication, dans le cas où le premier groupe est maintenu, avec le premier dispositif électronique et/ou l'au moins un dispositif électronique externe au travers d'une bande de fréquences utilisée par le premier groupe.

12. Procédé de la revendication 10 ou de la revendication 11, comprenant en outre le fait de s'abstenir, dans le cas où le premier groupe est maintenu, de communiquer avec le dispositif électronique externe compris dans le second groupe au travers de la bande de fréquences à utiliser pour la communication par le second groupe.

13. Procédé de l'une quelconque des revendications 10 à 12, dans lequel la configuration du second groupe comprend l'ajout du dispositif électronique externe qui a transmis un message de demande de jonction au second groupe en tant que premier groupe selon la réception du message de demande de jonction du second groupe à partir du dispositif électronique externe compris dans des informations indiquant le GC.

14. Procédé de l'une quelconque des revendications 10 à 13, dans lequel la configuration du second groupe comprend la transmission d'un message d'invitation pour rejoindre le second groupe au dispositif électronique externe compris dans les informations indiquant le GC.

15. Procédé de l'une quelconque des revendications 10 à 14, comprenant en outre :
la réception, lorsqu'un nouveau dispositif électronique externe rejoint le premier groupe, d'informations indiquant le nouveau dispositif électronique externe à partir du second dispositif électronique ; et
la réalisation d'une procédure de jonction du nouveau dispositif électronique externe au second groupe.
